# EUROPEAN PATENT SPECIFICATION

(11) **EP 1 230 623 B1**
(45) Date of publication and mention of the grant of the patent: **26.01.2005**
(21) Application number: 00977072.8
(22) Date of filing: 07.11.2000
(51) Int. Cl.: G07B 17/04

(54) **PROVIDING STAMPS ON SECURE PAPER USING A COMMUNICATIONS NETWORK**
BEREITSTELLUNG VON BRIEFMARKEN AUF SICHERHEITSPAPIER UNTER BENUTZUNG EINES KOMMUNIKATIONNETZES
FOURNITURES DE TIMBRES SUR DU PAPIER DE SECURITE UTILISANT UN RESEAU DE COMMUNICATION

(30) Priority: 10.11.1999 US 164639 P; 08.02.2000 US 181368 P; 09.02.2000 US 181299 P; 15.05.2000 US 204357 P; 22.05.2000 US 206207 P; 07.07.2000 US 611375; 07.07.2000 US 216653 P; 07.07.2000 US 216779 P
(43) Date of publication of application: 14.08.2002
(73) Proprietor: Neopost Inc., Hayward, CA 94544 (US)
(72) Inventor: LEON, J., P., San Carlos, CA 94070 (US); BROWN, L., Carlton, Jr., Warrenton, VA 20187 (US)
(74) Representative: David, Alain
(86) International application number: PCT/US2000/030711
(87) International publication number: WO 2001/035347

(56) References cited:
- EP-A- 0 376 576
- EP-A- 0 893 787
- EP-A- 0 927 963
- WO-A-00/49580
- WO-A-97/04353
- WO-A-98/57302
- US-A- 5 098 130
- US-A- 5 319 562
- US-A- 5 377 271
- US-A- 5 573 277
- US-A- 5 769 457
- US-A- 5 848 401
- "INFORMATION-BASED INDICIA PROGRAM (IBIP) PERFORMANCE CRITERIA FOR INFORMATION-BASED INDICIA AND SECURITY ARCHITECTURE FOR CLOSED IBI POSTAGE METERING SYSTEMS" INFORMATION BASED INDICIA PROGRAM HOST SYSTEM SPECIFICATION,XX,XX, 12 January 1999 (1999-01-12), page COMPLETE XP002138350

## Description

### BACKGROUND OF THE INVENTION

The present invention relates to the field of securing the material related to a monetary exchange, and more particularly to providing value indicia such as postage stamps on secure media over a communications network.

A postage meter allows a user to print postage or other indicia of value on envelopes or other media. Conventionally, the postage meter can be leased or rented from a commercial entity (e.g., Neopost Inc.). The user purchases a fixed amount of value beforehand and the meter is programmed with this amount. Subsequently, the user is allowed to print postage up to the programmed amount.

Since the postage meter is able to imprint indicia having monetary values, security is critical to prevent, deter, and detect frauds. In one conventional security scheme, the postage meter is designed to allow imprint of an indicium only when sufficient funds exist to cover the requested indicium amount. If the postage meter is tampered with, it ceases to function and can only be reactivated by an authorized agent. This scheme guards against fraudulent modification of the meter to print unauthorized postage labels. However, postage labels can also be fraudulently generated in other ways. For example, unauthorized labels can be reproduced from a label that is legitimately created. Also, devices can be designed to generate counterfeit labels in a manner similar to, for example, counterfeit currencies.

The United States Postal Service (USPS) has promulgated specifications for its Information Based Indicia Program (IBIP). The IBIP program supports new methods of applying postage in lieu of conventional approaches that typically rely on the use of a postage meter mechanically printing the indicium on mailpieces. The IBIP program contemplates postal indicia printed by conventional printers (e.g., thermal, inkjet, or laser) and including human-readable and machine-readable portions. An indicium refers to the imprinted designation or a postage mark used on mailpieces denoting evidence of postage payment. The machine-readable portion was initially specified to be a two-dimensional barcode symbology known as PDF417. The indicium content includes a digital signature for security reasons (to preclude forgery).

There are separate specifications for open and closed systems. The specifications have been updated over the last few years; the recent specifications for open and closed systems are:
- Information-Based Indicia Program (IBIP) Performance Criteria for Information-Based Indicia and Security Architecture for Open IBI Postage Evidencing Systems (PCIBI-O) (Draft February 23, 2000), and
- Information-Based Indicia Program (IBIP) Performance Criteria for Information-Based Indicia and Security Architecture for Closed IBI Postage Metering Systems (PCIBI-C) (Draft January 12, 1999).
These specifications are incorporated by reference in their entirety for all purposes.

An open system is defined as a general purpose computer used for printing information-based indicia, but not dedicated to the printing of those indicia. A closed system is defined as a system whose basic components are dedicated to the production of information-based indicia and related functions, that is, a device dedicated to creating indicia similar to an existing, traditional postage meter. A closed system may be a proprietary device used alone or in conjunction with other closely related, specialized equipment, and includes the indicium print mechanism.

The IBIP program specifies a postal security device (PSD) that manages the secure postage registers and performs the cryptographic operations of creating and verifying digital signatures. Section B.4.3 of the specifications specify the minimum data required to be stored in nonvolatile storage as follows:
- Device ID (PSD manufacturer ID, PSD model ID, PSD serial number)
- PSD private key
- IBIP common parameters
- Originating address
- Ascending register
- Descending register
- Maximum/minimum postage values
- PSD X.509 certificate serial number
- Any other authentication/verification data required for the Provider product

The open system specification describes a host system (a computer or postage meter) connected to an unsecured printer (e.g., a laser printer or the like) and a PSD. The host system also provides communication facilities that allow the PSD's vendor and/or the USPS to establish communications with the PSD. Communications supported include troubleshooting, accounting transactions, and the like.

The PSD and host cooperate to provide an indicium, which is then transmitted to and printed by the unsecured printer. The specified indicium allows the use of an unsecured printer (e.g., thermal, inkjet, or laser) by using a digital signature, which also supports authentication of the mail piece. The indicium includes human-readable information and machine-readable information (initially specified as a PDF417 two-dimensional bar code). Each PSD is a unique security device, having core security functions such as digital signature generation and verification and secure management of information (e.g., descending and ascending registers).

### SUMMARY OF THE INVENTION

The present invention relates generally to value indicium labels having one or more security features, and techniques for producing value indicia that include enhanced security features.

One embodiment provides a method for generating an item that is used as a medium of exchange, including a cryptographic identifier (e.g., digital signature) and a pre-processed material. The method includes obtaining the pre-processed material including a security feature, at a first location (e.g., a user computer). Next a cryptographic identifier is generated at a second location (e.g., a postal vending system or PVS). The cryptographic identifier is then sent to the first location, for example over the Internet, and combined with the pre-processed material to generate the item. The pre-processed material may include a pre-printed self-adhesive label. The security feature may include one or more of a serial number unique to the label or a sheet of such labels, serrated edges, a microprint stripe, a color fiber, taggants, a watermark, a hologram, color fibers, or a fluorescent stripe. In addition the indicium may include the serial number. In one embodiment the item is a postage stamp. In other embodiments the item may be a tax stamp, a hunting/fishing license stamp, a ticket, a check, a driver's license, a trading stamp (e.g., green stamp), or any other item of monetary value.

A further understanding of the nature and advantages of the inventions herein may be realized by reference to the remaining portions of the specification and the attached drawings.

### BRIEF DESCRIPTION OF THE DRAWINGS

Fig. 1 is a simplified block diagram of one embodiment of the present invention;
Fig. 2 is a simplified block diagram of one specific connection of a one embodiment of the present invention;
Figs. 3A-3C illustrate different embodiments of individual pre-printed postage labels;
Figs. 4A-4C illustrate different embodiments of individual printed postage stamps;
Figs. 5A and 5B illustrate different embodiments of sheets of postage labels;
Fig. 6 illustrates the sheet of Fig. 5A with printed postage indicia;
Fig. 7 is an expanded block diagram of a postage vendor system (PVS) in an embodiment;
Fig. 8 depicts relationships between AR and DR values of the GPSD and the MPSDs in a specific embodiment;
Figs. 9A and 9B illustrate another embodiment of an individual pre-printed postage label and a sheet of such postage labels;
Figs. 10A and 10B illustrate another embodiment of an individual printed postage stamp and a sheet of such printed postage stamps;
Fig. 11 illustrates an embodiment of a roll of preprinted postage labels;
Fig. 12A illustrates an embodiment of a sheet of postage labels combined with other information and non-postage labels;
Fig. 12B illustrates an example of an advertisement that may be printed on the reverse of the sheet of postage labels of Fig. 12A;
Fig. 13 is a simplified high-level flowchart showing processing performed by a user system and a postage vendor system for dispensing postage In an embodiment;
Fig. 14 illustrates an embodiment of a web page for unlocking a lot, e.g., a sheet of postage labels; and
Fig. 15 illustrates an embodiment of a web page of the selected individual labels of a postage label sheet that are to be printed.

### DESCRIPTION OF THE SPECIFIC EMBODIMENTS

### Introduction and Hardware Overview

Subheadings are used in this application as an aid to the reader and are not intended to supercede or limit any material in this application.

The present invention contemplates dispensing postage or other value items using a communication network such as the Internet. Fig. I is a simplified block diagram of a distributed computer network 100 which may incorporate an embodiment of the present invention. Computer network 100 includes one or more user computer systems 104 (two of which are designated 104-1 and 104-2), at least one postage vendor system (PVS) 102, and a postal authority system (PAS) 106 coupled to a communication network 108 via a plurality of communication links 110. User systems 104 are typically coupled to one or more printers 112 or other like printing devices, and other peripheral devices (not shown) such as a weighing scale.

Communication network 108 provides a mechanism for allowing the various components of distributed network 100 to communicate and exchange information with each other. As will be described further below, the PVS and user systems cooperate in transactions for printing indicia, typically including a cryptographic identifier generated at the PVS, on secure media at the user system location.

In other embodiments, a server system could be substituted for PVS 102, and could be configured to provide for payment of hunting or fishing licenses, driver's licenses, or other governmental or commercial licenses. The issued stamps would be proof of payment when affixed to the license. Another embodiment may use the stamps as proof of payment for tickets, for example, airline, movie, theater, club, toll booth, subway, bus, train, vacation, parking, or concert tickets.

Communication network 108 may itself include many interconnected computer systems and communication links. The communication links may be hardwire links, optical links, satellite or other wireless communications links, wave propagation links, or any other mechanisms for communication of information. While in one embodiment communication network 108 is the Internet, in other embodiments, communication network 108 may be any suitable computer network. Similarly, more than one PVS 102 may be coupled to communication network 108. Further, one or more printers 112 may optionally be coupled to a single user system 104, or alternatively a plurality of user systems 104 may share one or more common printers. Other devices such as weighing machines for weighing mail pieces, fax machines, scanners, etc. may also be coupled to user systems 104.

User systems 104 allow users of the present invention, for example, postage consumers, to interact with and buy postage from PVS 102. These users may include one or more human beings interacting with an user system 104, one or more processes executing on user system 104 or systems coupled to user systems 104, devices coupled to user system 104, or other entities capable of interacting with PVS 102. Various different types of interactions with PVS 102 are facilitated by user systems 104. For example, users may use user systems 104 to configure requests to purchase postage from PVS 102. These user purchase requests are then communicated from user systems 104 to PVS 102 via communication network 108. In response to the user requests, user systems 104 may receive information for printing indicia (or a single indicium) from PVS 102. A user may then use user system 104 to print the indicia using printer devices coupled to or accessible to user system 104. The indicia may be printed on labels, on paper, on the mail pieces themselves, or on other like media. In alternative embodiments, a user using user system 104 may store the information for printing indicia received from PVS 102 on a storage medium, such as a computer disk, for subsequent printing of the indicia.

Users may also use user systems 104 to perform other activities such as browse web-pages stored by PVS 102, register as users of services provided by PVS 102, provide financial and credit information for consummating commercial transactions with PVS 102, review status of user accounts if such accounts are maintained by PVS 102, review postage purchase history, access help or customer services provided by PVS 102, and to perform other like activities. Accordingly, in a client-server environment, user system 104 typically operates as a client requesting information from PVS 102 which operates as a server which performs processing in response to the client request and provides the requested information to the client systems. It should be however apparent that a particular user system 104 may act both as a client or a server depending on whether the user system is requesting or providing information.

As stated above, a user may use user system 104 to browse or interact with web pages provided by PVS 102. These web pages may be stored by one or more web servers in PVS 102 and may be accessed by users of user system 104 via a browser program executing on user system 104. Examples of browser programs include the Internet Explorer browser program provided by Microsoft Corporation, the Netscape Navigator/Communicator browser provided by Netscape Corporation, and others. In the Internet and World Wide Web (the "Web") environment, the web pages may be written in Hypertext Markup Language (HTML) and may incorporate any combination of text, graphics, audio and video content, software programs, and other data. Web pages may also contain hypertext links to other web pages. Each web page is uniquely identified by an address called a Uniform Resource Locator (URL) that enables users to access the web page. Users may access web pages by providing URL information to the browser, either directly or indirectly, and in response, a web page corresponding to the user-specified URL is downloaded from a server coupled to communication network 108 to the requesting user computer 104. The downloaded web page may then be viewed by the user using the browser.

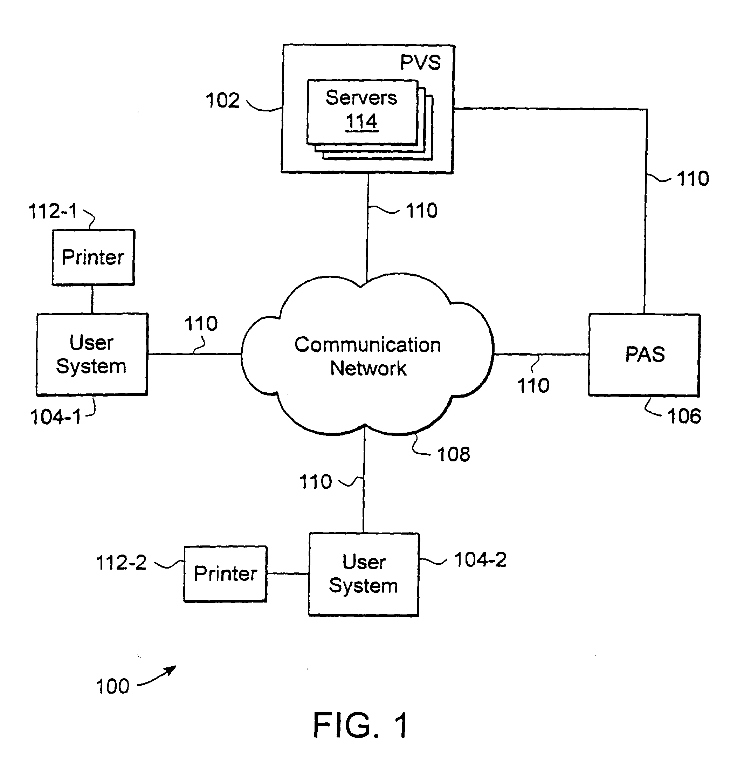

PVS 102 is responsible for dispensing postage to users in response to postage purchase requests received from user systems 104. As shown in Fig. 1, PVS 102 may itself include multiple interconnected computer and server systems 114 and communication links, as will be described below. PVS 102 may be configured to receive postage requests from user systems 104, validate the postage requests, generate information for printing indicia in response to the postage requests, perform security functions related to the postage transaction, manage funds related to the postage transaction, communicate the information for printing the indicia to the requesting user systems 104, maintain users accounts, and several other functions. These functions are generally performed by software code modules executed by PVS 102. However, it should be apparent that these functions may be also performed by software modules or hardware modules of PVS 102, or combinations thereof.

In some embodiments, the information for printing indicia generated by PVS 102 is generally along the lines specified by the IBIP specifications published by the United States Postal Service (USPS). As indicated above, the IBIP specifications propose new methods for generating postage which will make use of technological advances in the fields of computers and communication networks while enhancing the security of the postage. These methods are supposed to retrofit and augment existing postage meters using new technology known as information-based indicia.

The security-critical functions performed by PVS 102 as part of generating the information for printing the indicia preferably comply with the security-critical functions performed by the Postal Security Device (PSD) described in the IBIP specifications. PVS 102 may also be configured to perform functions performed by the Host System described in the IBIP specifications.

In a preferred embodiment, a single postal license number is assigned to each PVS 102 by a postal authority such as the USPS. PVS 102 uses the single postal license number to fulfill postage requests from a plurality of unrelated users who may be at different geographical addresses. Thus a single postal license number is effectively shared between a plurality of users who may have different geographical addresses. This is substantially different from conventional postage vending techniques wherein a user is required to apply for and receive at least one unique postal license number. This is the case even if the postage indicium was generated by a central computer, for example, as discussed in U.S. Patent No. 6,005,945 (Whitehouse). Since the postal license number is associated with PVS 102 rather than with the user, the user is shielded from the procedural steps required for obtaining the postal license number. In fact, the consumer of the postage does not even have to be aware of the postal license number or any need to obtain one. A user may buy postage by simply sending a postage request to PVS 102 and receiving information for printing one or more indicia corresponding to the request from PVS 102.

Referring back to Fig. 1, postal authority system (PAS) 106 may comprise one or more computer systems managed by a postal authority authorized to regulate and control all postal matters. Examples of postal authorities include the United States Postal Service (USPS), France's La Poste, UK's Royal Mail, and others. In most instances, the postal authority is a governmental or quasi-governmental agency authorized to oversee postal matters. PAS 106 may be coupled to PVS 102 via communication network 108 or directly via some other communication link 110. The information exchanged between PVS 102 and PAS 106 may include finance information, information required by the postal authority for audit purposes, status information, security information, and other like information. The information required by the postal authority for audit purposes may include information identifying the postage buyers, the postage value and amount purchased by the buyers, and other information. PVS 102 may be configured to download information to PAS 106 on a periodic basis using batch processing, or upon the occurrence of certain events. PVS 102 may also be configured to purchase postage from PAS 106.

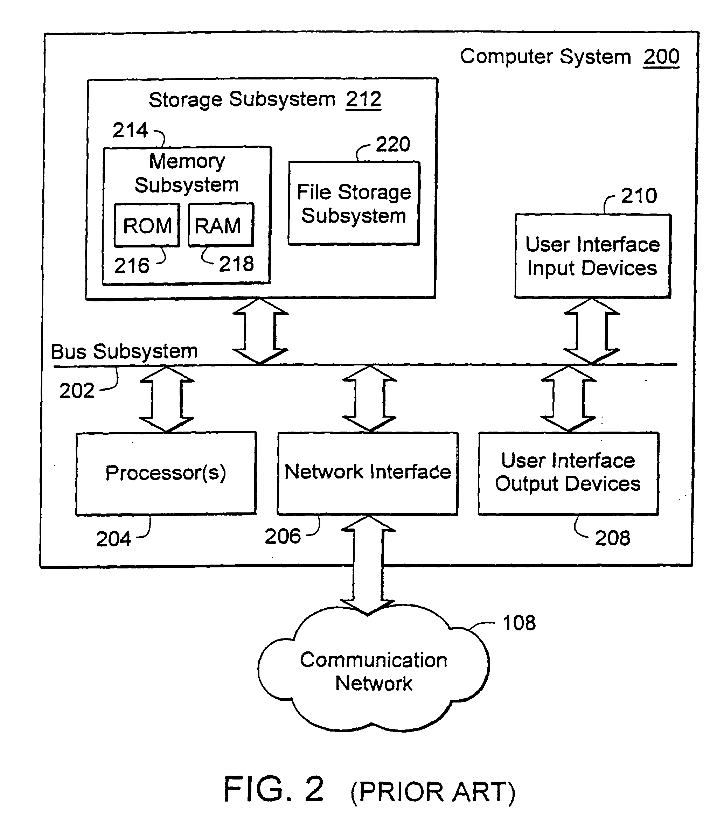

Fig. 2 is a simplified block diagram of an exemplary computer system 200 suitable for use with the invention. Since the figure is drawn at a high level, it is labeled "Prior Art." When operating in the context of embodiments of the invention, such a computer system is not prior art. Computer system 200 may function as user system 104, as PVS 102 or as one of the computer systems which make up PVS 102, as PAS 106, or other like system. Computer system 200 typically includes at least one processor 204, which communicates with a number of peripheral devices via a bus subsystem 202. These peripheral devices typically include a storage subsystem 212, comprising a memory subsystem 214 and a file storage subsystem 220, user interface input devices 210, user interface output devices 208, and a network interface subsystem 206. The input and output devices allow user interaction with computer system 200. It should be apparent that the user may be a human user, a device, a process, another computer, and the like. Network interface subsystem 206 provides an interface to outside networks, including an interface to communication network 108, and is coupled via communication network 108 to corresponding interface devices in other computer systems. The network interface may include, for example, a modem, an Integrated Digital Services Network (ISDN) device, an Asynchronous Transfer Mode (ATM) device, a Direct Subscriber Line (DSL) device, a fiber optic device, an Ethernet card, a cable TV device, or a wireless device.

User interface input devices 210 may include a keyboard, pointing devices such as a mouse, trackball, touchpad, or graphics tablet, a scanner, a barcode scanner for scanning article barcodes, a touchscreen incorporated into the display, audio input devices such as voice recognition systems, microphones, and other types of input devices. In general, use of the term "input device" is intended to include all possible types of devices and ways to input information into computer system 200 or onto communication network 108.

User interface output devices 208 may include a display subsystem, a printer, a fax machine, or non-visual displays such as audio output devices. The display subsystem may be a cathode ray tube (CRT), a flat-panel device such as a liquid crystal display (LCD), or a projection device. The display subsystem may also provide non-visual display such as via audio output devices. In general, use of the term "output device" is intended to include all possible types of devices and ways to output information from computer system 200 to a user or to another machine or computer system.

Storage subsystem 212 stores the basic programming and data constructs that provide the functionality of the computer system. For example, the various modules implementing the functionality of the present invention may be stored in storage subsystem 212 of PVS 102. These software modules are generally executed by processor(s) 204. In a distributed environment, the software modules may be stored on a plurality of computer systems and executed by processors of the plurality of computer systems. Storage subsystem 212 also provides a repository for storing the various databases storing information according to the present invention. Storage subsystem 212 typically comprises memory subsystem 214 and file storage subsystem 220.

Memory subsystem 214 typically includes a number of memories including a main random access memory (RAM) 218 for storage of instructions and data during program execution and a read only memory (ROM) 216 in which fixed instructions are stored. File storage subsystem 220 provides persistent (non-volatile) storage for program and data files, and may include a hard disk drive, a floppy disk drive along with associated removable media, a Compact Digital Read Only Memory (CD-ROM) drive, an optical drive, removable media cartridges, and other like storage media. One or more of the drives may be located at remote locations on other connected computers at another site on communication network 108. Information stored according to the teachings of the present invention may also be stored by file storage subsystem 220.

Bus subsystem 202 provides a mechanism for letting the various components and subsystems of computer system 200 communicate with each other as intended. The various subsystems and components of computer system 200 need not be at the same physical location but may be distributed at various locations within distributed network 100. Although bus subsystem 202 is shown schematically as a single bus, alternative embodiments of the bus subsystem may utilize multiple buses.

Computer system 200 itself can be of varying types including a personal computer, a portable computer, a workstation, a computer terminal, a network computer, a mainframe, or any other data processing system. Due to the ever-changing nature of computers and networks, the description of computer system 200 depicted in Fig. 2 is intended only as a specific example for purposes of illustrating a representative configuration. Many other configurations of a computer system are possible having more or fewer components than the computer system depicted in Fig. 2. Client computer systems and server computer systems generally have the same configuration as shown in Fig. 2, with the server systems generally having more storage capacity and computing power than the client systems.

The information for printing an indicium after it is generated at the server may be sent to the user system either as a bitmap of the human-readable and machine-readable portions suitable for printing, or as a data structure or data message that includes the indicium data. If indicium data is sent, then the printer program generates the bitmap from the information. The bitmap is then printed by the printer on either a label or envelope to give a stamp or a stamped envelope, respectively. The Java applet may be deleted, either when the web browser is closed or when the user changes domains, i.e., leaves the service provider's website. In another embodiment the Java applet remains resident after the printing is done.

In a specific embodiment the server 110 is a conventional e-commerce website, maintained by a service company. Consumers using user systems, such as 118a, 118b, 118c, visit the website, and on the first visit may complete a form to open an account. When the account is opened on the server 110, the user system, for example, 118a, receives a secure password which can be used to obtain complete access to the e-commerce site via a secure link, such as, for example, a Secure Sockets Layer (SSL) link. In another embodiment the consumer may be identified by his/her consumer e-mail address and credit card. The account allows the consumer to deposit funds in the account, for example by credit card, smart card, or bank transfer, or by cash/check through the mail. The consumer may then draw on the deposited funds to print one or more postage indicia, of any desired value up to the total amount on deposit. The consumer may log off and re-enter the site any number of times, printing postage on demand until the deposited funds have been spent down to a specified minimum required to keep the account open. Depletion of the deposit inhibits further access to the account, and requires the consumer to add at least one increment of funding to the deposit before the account can be used again to print postage. The consumer has the option of replenishing the deposit before reaching the minimum, which keeps the account open without interruption.

### Security Measure Examples

Systems for dispensing postage that use the internet and allow consumers to employ standard type general purpose computers and printers are convenient, but have risks of fraudulent imprinting of postage. Thus the embodiments of the present invention offer the convenient features of e-commerce and provide the enhanced security of specialized printing stock incorporating security features such as serial numbers, watermarks and/or other security features. While specific embodiments of secure label material incorporate a number of features to enhance security, it should be understood that other embodiments can use different combinations and sub-combinations of features.

In embodiments, the use of specially manufactured printing stock (sometimes called pre-processed material) may be used to print the indicia, in order to increase the difficulty of fraudulent misuse. Users are required to print on special pre-printed labels which may contain any or all of a variety of security features, for example, bar-coding, microprinting, watermarking, a fluorescent stripe, or the like. In addition the labels may have serrated edges, which both enhance the security, as well as improve the esthetics of what is the typical outline of a U.S. postage stamp. Other alternative embodiments for security features on postage labels can be seen by one skilled in the art by the disclosures in Application No. 60/093,849, filed July 22, 1998, entitled "Method and Apparatus for Postage Label Authentication," of J.P. Leon and David A. Coolidge and the above-noted Application No. 09/358,801, filed July 21, 1999, entitled "Method and Apparatus for Postage Label Authentication," of J.P. Leon and David A. Coolidge, the disclosures of which are incorporated by reference in their entirety for all purposes.

In other embodiments, serial numbers associated with each postage label and/or a "lot" of postage labels, for example, a sheet often labels, are used as a security feature to prevent fraud. Users may be required to input a valid lot serial number and/or an individual label serial number before printing is enabled. As a matter of terminology, it is convenient to use the term "sheet serial number" to refer to the lot serial number where the lot that is serialized is a sheet. Most of the specific embodiments discussed below use sheets of labels.

Serial numbers are assigned to lots and/or individual labels as they are manufactured, and are tracked and validated by the server system. A list of valid serial numbers is maintained by PVS 102, consisting of all serial numbers which are known to have been issued, but have not yet been reported as used. ("Issued" may, for example, include ''manufactured'', "received into stock", "sold at wholesale", "sold at retail", and the like). The list is updated each time a label, or a lot of labels, is imprinted, by removing from the list the serial number of that label, or of that lot. Invalid serial numbers are all numbers or character strings not included in this list.

For increased security, both lots and individual labels can be serialized; lot serial numbers and label serial numbers may be related or unrelated to each other mathematically. In either case, each lot serial number is associated with a particular set of label serial numbers. The lot serial numbers are tracked. When the consumer logs into the website, she/he is required to input a valid serial number for the lot of labels then in use. Along with the list of valid lot serial numbers, the server also contains data showing the set of individual label serial numbers associated with each lot. These label serial numbers become valid only after a consumer reports that the lot that contains them has gone into service. In an another embodiment, when printing postage, the consumer is further required to enter a valid serial number for each individual label before the system will generate the indicium. The server checks each such entry against a list of valid (i.e., unused) label serial numbers for the lot then in use. As each label serial number is used, it is invalidated for the future by deleting it from the list. When all the label serial numbers in the lot have been used, the lot serial number becomes invalid as well.

In an embodiment an example of a range of lot serial numbers are those hexadecimal (Hex) values between 2 FFFF FFFF (34 bits) and 1000 Hex (4096 decimal). To unlock a lot for printing stamps in this embodiment, the user enters an unlock code such as a hex number "PPPP-SS," where "PPPP" are four hex numbers representing a "lot serial number" and "SS" are two hex numbers representing a Cyclic Redundancy Code (CRC) which is a error detection code for "PPPP." In another embodiment the "lot serial number" is "PPPP" and the error detection code also has four hex numbers, e.g., "SSSS." For example the user may input into a Web page a hex number "11F7-4916," which would unlock a lot of ten labels with a lot serial number of "11F7-4916." The user could then print an indicium on each one of the ten labels in the lot. In another embodiment, the hex number represented by "P" above is N hex numbers long, e.g., N=4 above, and the checksum represented by "S" above may be M hex numbers long, e.g., M=2 Or M=4 above. In another embodiment the checksum could be an error detection code, for example, parity check or hamming code, or an error detection/correction code, for example, a Forward Error Correction (FEC) code.

### Specific Label, Sheet, and Indicia Examples

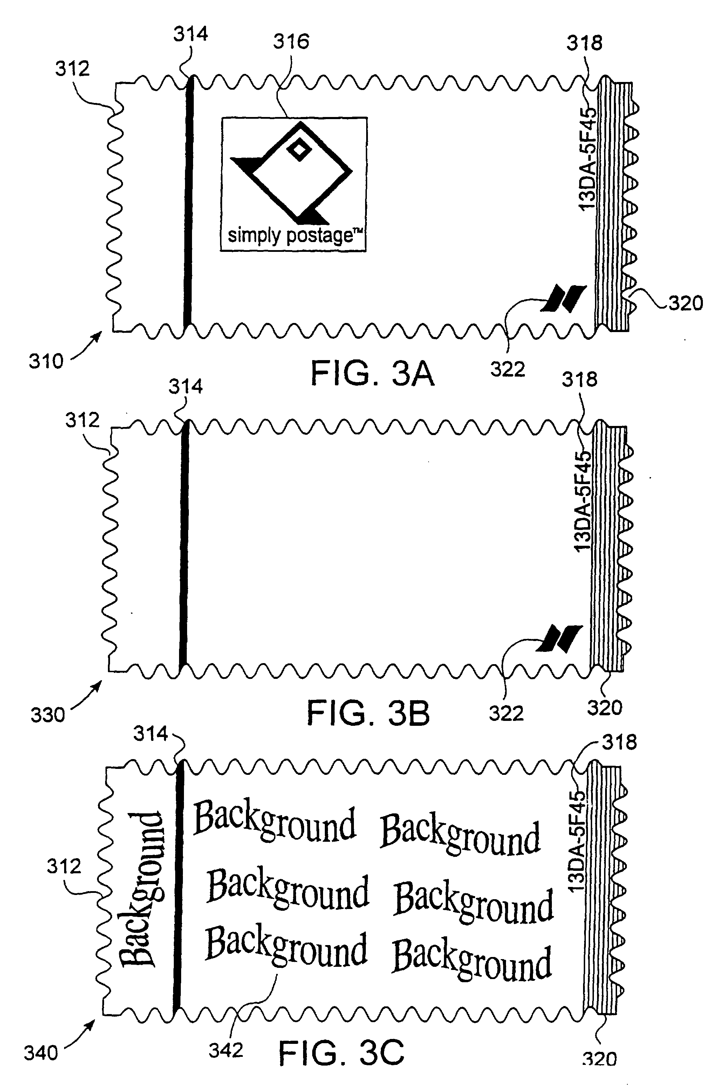

Fig. 3A illustrates an individual pre-printed label 310 in one embodiment. Label 310 has serrated edges 312, which add a security feature to the individual label as well as provide the "look and feel" of an outline of a conventional U.S. postage stamp. Label 310 has a pink/red colored stripe 320 (preferably fluorescent), at least one line, but preferably dual-parallel lines of microprint 314, where each line may have microprint "Neopost" printed repetitively, a serial number 318, for example, "13DA-5F45," a logo 316, for example a logo for "simply postage™ ", and a watermark 322, for example a stylized "N."

Watermark 322 makes it difficult to reproduce the label 310 with a photocopier. Microprint 314 is in many instances practically invisible to the human eye, and thus usually escapes notice; it is typically legible with use of a magnifying glass or when viewed under a microscope. Pink fluorescent stripe 320 could be replaced or augmented by a fluorescent stripe that is invisible under normal light, but would fluoresce under certain non-visible forms of light, for example, ultraviolet (UV) light.

Fig. 3B illustrates an individual pre-printed label 330 in another embodiment. Label 330 is similar to label 310 except the pre-printed logo 316 is missing. Logo 316 need not be pre-printed, but may be printed on label 330 at the same time the indicium is printed onto label 330. However, a color logo is preferably pre-printed.

Fig. 3C illustrates an individual pre-printed label 340 in another embodiment. Label 340 is similar to the label 310 except logo 316 and watermark 322 are missing and a pre-printed background 342, shown schematically as "Background," has been added. The use of the word "Background" is merely illustrative and represents any graphical or textual background, for example, a scenic background, a picture of George Washington, a family portrait, an advertisement, a holiday greeting, a famous person or place, or any other of the numerous customized backgrounds either created by the label company, the service company, or the user.

Since an indicium will ultimately be printed on the label, the background should be in light colors or located in regions that will not be overprinted. Background 342 need not be pre-printed, but may be printed on label 340 at the same time the indicium is printed onto label 340. However, the above caveat regarding overprinting applies.

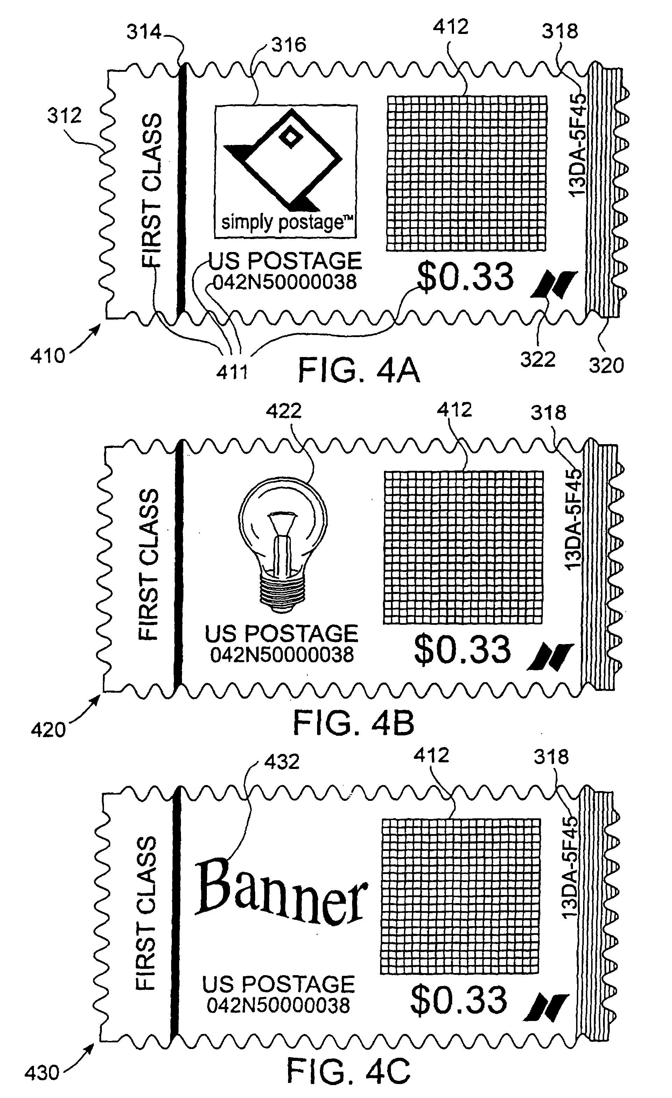

Fig. 4A illustrates an individual postage stamp 410 resulting from printing an indicium on a label such as label 310 (Fig. 3A). The information for printing the indicium when printed as the indicium includes human-readable information 411 and machine-readable information 412. An example of the human-readable information 411 includes: the postage amount, e.g., "$0.33;" the mail class, e.g., "first class;" and the meter number, e.g., "042N50000038." In the present embodiments, the meter number refers to a specific resource in PVS 102 that participated in generating the information for printing the indicium.

An example of the machine-readable information is the two-dimensional code 412 which includes the digital signature and other indicium information. The two-dimensional code may be, for example, a matrix symbology (e.g., Data Matrix), or a two-dimensional bar code (e.g., PDF 417). Note the origin address is not printed. The digital signature in the machine-readable information may include serial number 318, e.g., "13DA-5F45." The machine-readable information is shown schematically as a grid.

Fig. 4B illustrates an individual postage stamp 420 resulting from printing the indicium and a graphical element 422 on a label such as label 330 (Fig. 3B) or label 340 (Fig. 3C). This is an example of the ability for the dynamic printing of historical, advertising, educational, informational, or entertainment graphical or textual information on a label. Vendor or user customized backgrounds or graphics may be pre-printed or dynamically printed when the indicium is printed. By prior arrangement, a party whose name or logo was printed would pay the owner of the intellectual property rights for the label a fee for having its name or logo printed. Another example of customization, is a user selecting a graphics image from an application program such as Adobe PhotoShop (provided by Adobe Systems Inc.) and printing the image on the background or in a blank region for a logo, in black and white or color. Other examples of customized backgrounds are advertisements, informational pictures, special designs offered by the USPS or governmental agency, or any other legal graphic or text. Fig. 4C illustrates an individual postage stamp 430 using a label, such as label 330 (Fig. 3B) or label 340 (Fig. 3C), where a banner 432 is printed at the time of printing the indicium. This allows for the dynamic printing of a banner such as "Conserve Energy," or "Support Your Local Merchant" on the label.

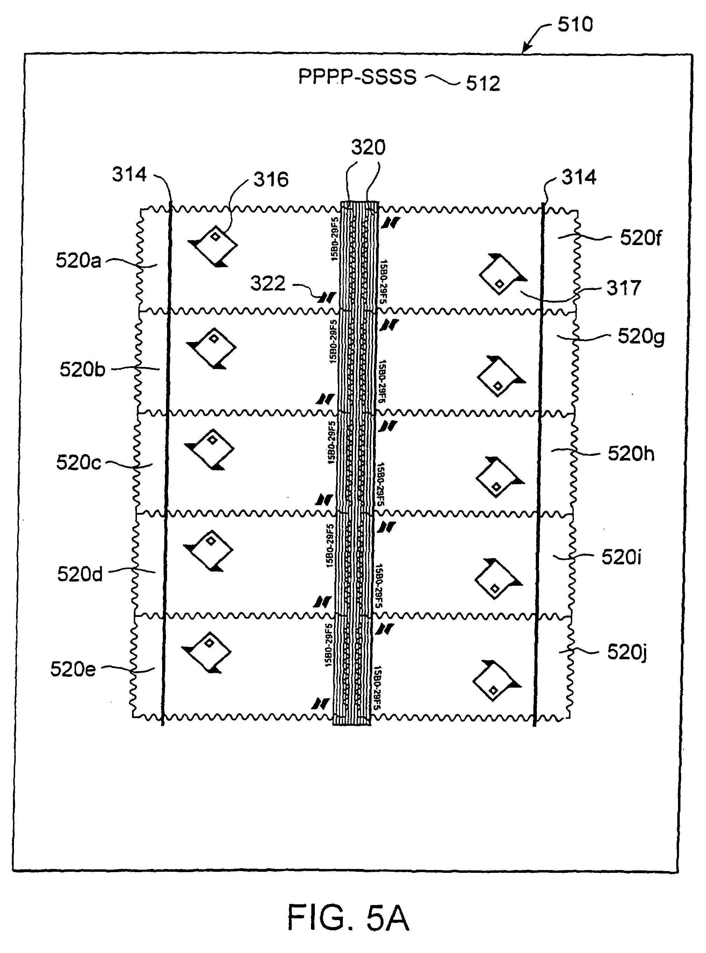

Fig. 5A illustrates a sheet 510 of postage labels in an embodiment. Sheet 510 of postage labels carries a sheet (or lot) serial number 512, and includes ten individual postage labels, 520a-520j. In general, these labels may correspond to any of the individual labels described above, but as illustrated, they correspond to label 310 (Fig. 3A). Thus corresponding reference numerals for the security features are used. The pink/red vertical stripe 320, and the vertical dual-parallel line of microprint 314, extend the height of the label area of the sheet to provide those features to all the labels. Labels 520f-520j are similar to labels 520a-520e, except they have been rotated 180 degrees. Another description for labels 520f-520j is that they are labels 564a-564e horizontally flipped and then vertically flipped. The sheet serial number 512 which is associated with the sheet of postage labels 510 is shown generically as "PPPP-SSSS." In one embodiment, sheet serial number 512 and the individual label serial numbers are all the same; in other embodiments the sheet serial number may be different from the individual label serial numbers. Further, the individual label serial numbers on a sheet do not need to be the same as each other.

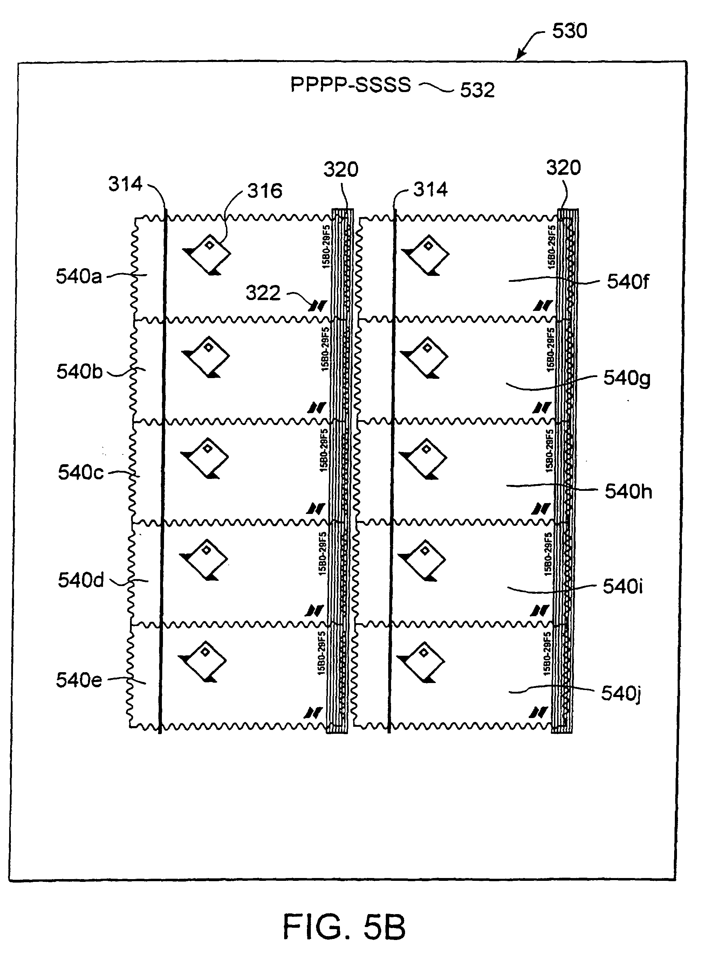

Fig. 5B illustrates an example of a sheet 530 of postage labels with a sheet serial number 532 and ten individual postage labels 540a-540j. In this embodiment, all the labels are oriented the same way. An individual postage label, for example, label 540a includes one pink/red vertical stripe 320, one vertical dual-parallel line of microprint 314, and a company logo 316. The watermark 322 is optional. Labels 520f-520j are a second column of labels like labels 520a- 520e.

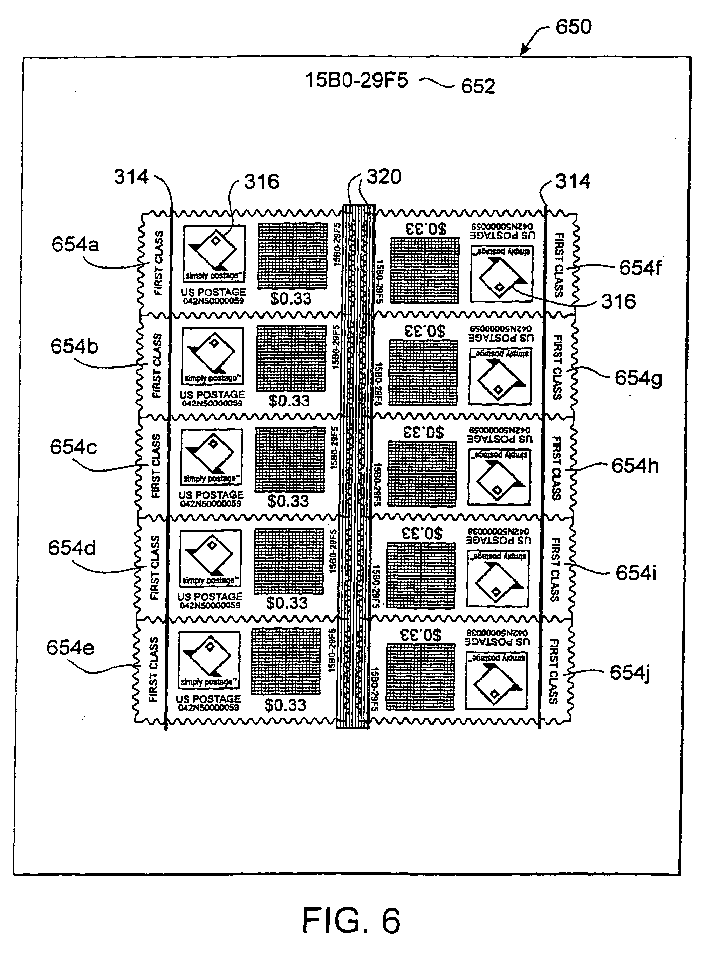

Fig. 6 illustrates an example of a printed postage label sheet 650 using a label sheet such as label sheet 510 (Fig. 5A). The postal label sheet 650 has a sheet serial number 652 and ten individual printed labels (stamps) 654a-654j. It is noted that the indicia in the right column of stamps have been printed at 180 degrees to correspond with the rotated labels. In this instance, the watermark is absent.

Referring back to Fig. 5A, the significance of the 180-degree orientation of the labels in the first array, i.e., labels 520a - 520e, relative to the labels in the second array, i.e., labels 520f - 520j, is that label sheet 510 can be inserted into the printer either bottom or top first. For example, if the label sheet were inserted top first, i.e., with sheet serial number 512 being nearest to the printer insertion point, then the two-dimensional code is printed to the right of logo 316 in label 520a and rotated 180 degrees and to the left of logo 316 on label 520f. Now if the label sheet were inserted bottom first, i.e., the insertion of sheet 510 with sheet serial number 512 being farthest from the printer insertion point, then labels 564j and 564e are still correctly printed. Thus one source of user error, i.e., which side goes in first, is removed, at least for the situation where all labels will be printed at one time.

### Postage Vending System (PVS) Structure and Operation

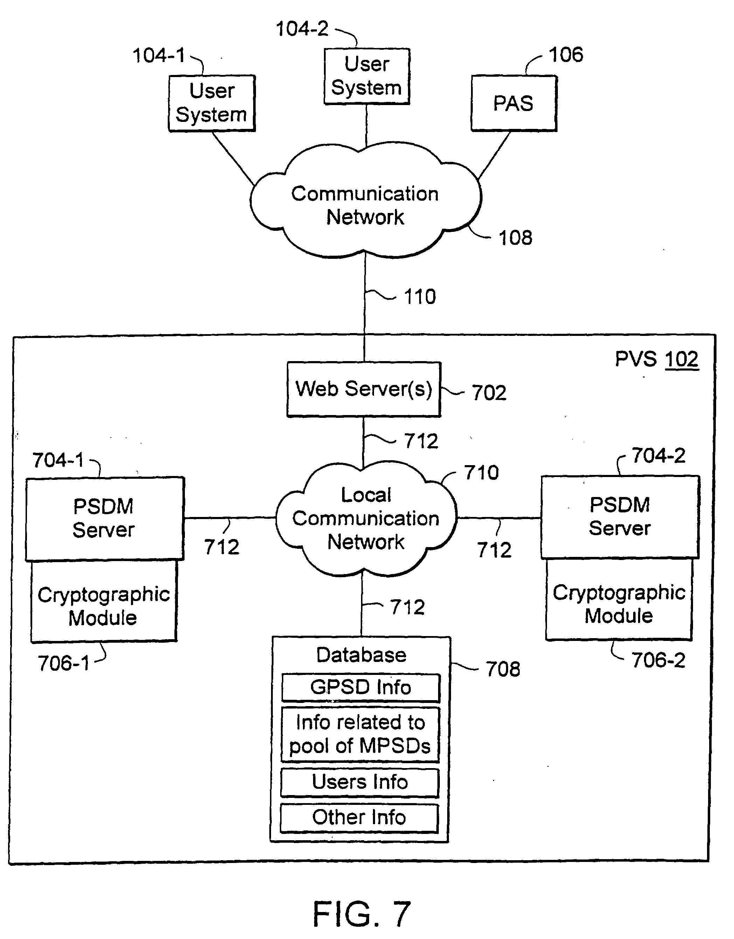

Fig. 7 is an expanded block diagram of an embodiment of PVS 102. As shown in Fig. 7, PVS 102 may comprise one or more web servers 702, one or more postal security device module (PSDM) servers 704 (with associated cryptographic modules 706), and a database 708 coupled to a local communication network 710 via a plurality of communication links 712. The term "database" as used in this application may refer to a single database or to a plurality of databases coupled to local communication network 710. Further, database 708 may be a relational database, a SQL database, an object-oriented database, a flat file, or any other way of storing information. Database 708 may be implemented, for example, on a personal computer, an NT Server, a Novell Server, a mainframe, or on a UNIX server.

Local communication network 710 provides a mechanism for allowing the various components of PVS 102 to communicate and exchange information with each other. Local communication network 710 may itself include many interconnected computer systems and communication links. Communication links 712 may be hardwire links, optical links, satellite or other wireless communications links, wave propagation links, or any other mechanisms for communication of information. The configuration of PVS 10 depicted in Fig. 7 is merely illustrative of a specific embodiment.

Web server 702 may host the postage vendor's web site and store web pages provided by the postage vendor. Web server 702 is responsible for receiving URL requests from user systems 104 and for forwarding web pages corresponding to the URL requests to the requesting user systems 104. These web pages allow a user to interact with PVS 102. e.g., to configure a request to purchase postage from PVS 102. When user system 104 requests communication with PVS 102, web server may be configured to establish a communication link between user system 104 and PVS 102. For example, web server 702 may establish a secure Internet socket link. e.g., an SSL 2.0 link, between PVS 102 and user system 104. The information communicated between user system 104 and PVS 102 may be SSL encrypted using various encryption levels, e.g., 40-bit encryption, 128-bit encryption, and the like. Web server 702 may also incorporate a firewall which shields the internal PVS network from communication network 108 and user systems 104 and other resources coupled to communication network 108. In an embodiment, web server 702 is responsible for receiving requests from user systems 104 to purchase stamps and for performing load distribution and fail-over processing associated with the requests. Web server 702 may also be configured to control the downloading of printer control programs from PVS 102 to user system 104.

Each PSDM server 704, in conjunction with one or more cryptographic modules 706 coupled to the PSDM server, is responsible for generating the information for printing the indicium in response to requests to buy postage received from one or more user systems 104. In an embodiment, functions performed by PSDM server 704 include functions performed by a Postal Security Device (PSD) as described in the IBIP specifications published by the USPS. For example, functions performed by PSDM server 704 include initialization and creation of PSD resources, digital signature generation, management of funds related to the postage dispensed by PVS 102, generation of information for printing the indicia, key handling, and other functions. PSDM servers 704 are designed to operate in a clustered environment to allow for expandability to meet the needs of a rapidly growing user base. In an embodiment, PSDM server 704 communicates with web server 702 using a DCOM (Microsoft's Distributed Component Object Model) interface.

Each PSDM server 704 may comprise one or more cryptographic modules 706 for performing cryptographic functions and for generating digital signatures. Various keys for performing security-critical functions such as digital signature generation, hashing, encryption, etc. are stored by cryptographic module 706. In an embodiment, cryptographic module 706 is a nCipher nFast/CA module which is validated to FIPS 140-1 Level 3 security.

PSDM server 704 uses PSD resources to generate indicia and to track monetary amounts related to the postage dispensed by PVS 102. In order to increase the indicia generation throughput, a plurality of shared PSD resources may be used by PSDM servers 704 to generate the indicia. By using a plurality of PSD resources, multiple PSDM servers 704 can run concurrently, producing indicia in parallel without the bottleneck of sharing a single PSD resource.

In an embodiment, each PSD resource comprises a unique PSD identifier (e.g., a 4-byte identifier), a descending register (DR) value (e.g., a 4-byte value), an ascending register (AR) value (e.g., a 5-byte value), and a control code (e.g., a 20-byte value). The PSD identifier uniquely identifies each PSD resource. The ascending register (AR) value represents the total monetary value of all indicia ever produced by the PSD during its life cycle. The descending register (DR) value indicates the available funds assigned to the PSD resource which may be used to dispense postage. In an embodiment, the monetary values stored by the AR and DR values are measured in 1/10 of 1-cent increments as specified in the IBIP specifications. The control code is a secure hash of the PSD identifier, the PSD AR value, and the PSD DR value. In an embodiment, the control code is generated using a HMAC-with-SHA1 (RFC 2104) using a secret hash-based message authentication code (HMAC ) key stored by cryptographic module 706.

Monetary amounts related to the postage dispensed by PVS 102 are tracked using a global PSD (GPSD) resource and a pool of PSD resources referred to as mini-PSDs (or MPSDs). In an embodiment, eight MPSD resources may be used by a single cryptographic module 706 associated with PSDM server 704 to concurrently generate information for printing indicia. The sum of the AR value and the DR value of the GPSD represents the total amount of postage bought from the postal authority, for example, from the USPS, by the postage vendor provider (e.g., Neopost) of PVS 102. The sum totals of the AR and DR values of the MPSD resources matches the AR and DR values of the GPSD resource. Information related to the GPSD resource and MPSD resources may be stored in database 708.

In an embodiment, each MPSD resource may be assigned a unique number by the postage vendor. A number assigned to a particular MPSD may be included in the information for printing an indicium generated by the particular MPSD and printed as part of the indicium. For example, the number "042N50000051" (reference number 411 in Fig. 4A) uniquely identifies the MPSD resource which was used for generating the information for printing the indicium depicted in Figs. 4A-4C. This MPSD serial number is like a meter number and may be used to track the MPSD resource responsible for generating information for printing the indicium. In an embodiment, the MPSD serial number "042N50000051" may represent a combination of:
"04" - manufacturer identifier assigned by the postal authority to the postage vendor;
"2N" - model identifier (details provided below);
"50000051" -number of MPSD, which in turn may include a global PSD number "0000", a machine number "0", and a PSD number "051." As noted above, multiple MPSDs share each cryptographic module, with a single private/public signature key pair. However, unique certificate numbers assigned by a postal authority may also be assigned to each MPSD uniquely identifying each MPSD.

Database 708 acts as a repository for storing information related to the postage dispensing process. For example, database 708 may store information related to the PSD resources (both GPSD and MPSDs), information used for generation of digital signatures, and other like information. Database 708 may also store information about users who have purchased postage from PVS 102. Information related to users who have registered with PVS 102, e.g., user account information, user preferences information, etc. may also be stored by database 708. Database 708 may also store the postal license number assigned to PVS 102 by the postal authority. Other information related to the dispensing of postage may also be stored by database 708. According to an embodiment, database 708 is coupled to web server 702 and to PSDM server 704 via an ODBC interface.

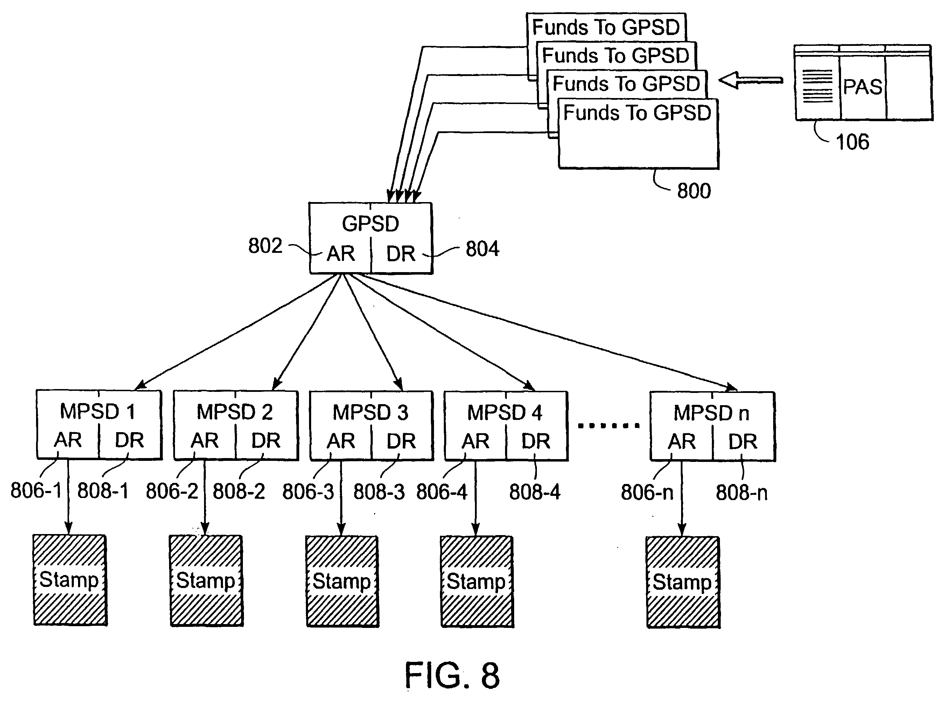

Fig. 8 depicts relationships between the AR and DR values of the GPSD resource and the MPSD resources. As shown in Fig. 8, funds 800 may be purchased from postal authority 106 and added to the DR value 804 of the GPSD resource. The summation of the AR 802 and DR 804 values of the GPSD resource indicate the total funds purchased from the postal authority. The funds may then used to fund the individual MPSD resources in order to prepare them for generating information for printing indicia. Each time a MPSD resource is funded for a particular amount, the AR value 802 of the GPSD resource is increased by the particular amount and the DR value 804 of the GPSD resource is decreased by the particular amount. The particular amount is added to the DR value 808 of the MPSD resource being funded. The summation of the ARs 806 and DRs 808 of the individual MPSD resources equals the AR value 802 of the GPSD resource. Each time an MPSD resource generates information for printing an indicium for a stamp, the value of the stamp is deducted from the MPSD resource's DR value 808 and added to the MPSD resource's AR value 806.

If the DR value of the selected MPSD resource is lower than the value of the stamp for which the MPSD has to generate information for generating an indicium corresponding to the stamp, it implies that the MPSD does not have sufficient funds to generate the indicium and that the MPSD has to be funded before the information for printing the indicium can be generated.

### Additional Label, Sheet, and Indicia Examples

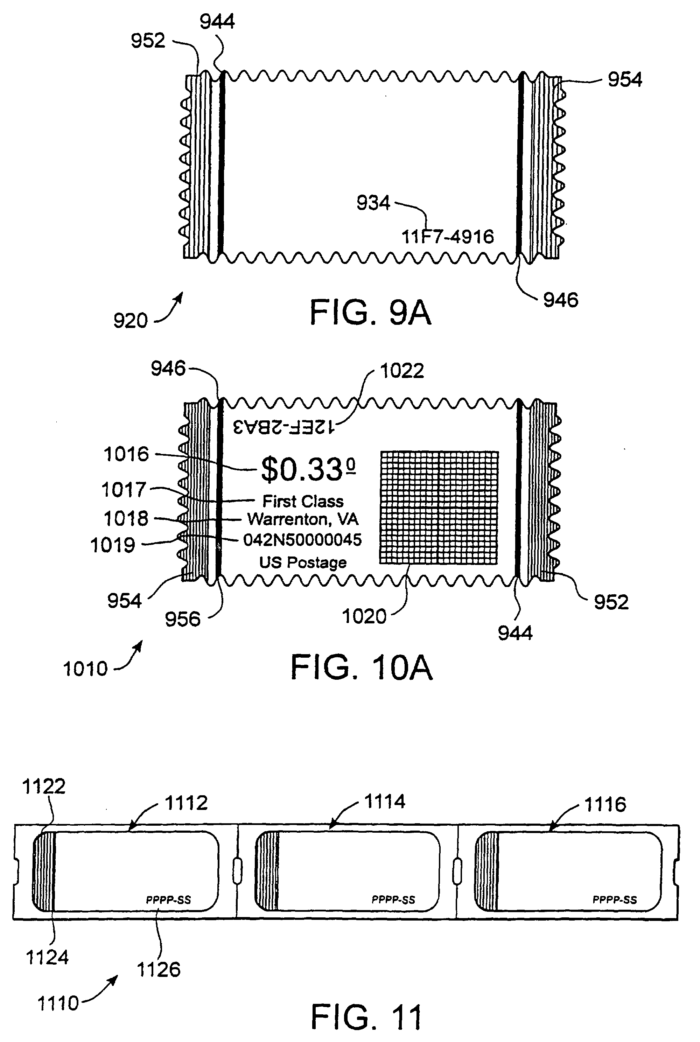

Fig. 9A illustrates an individual postage label 920 in another embodiment of the present invention. Label 920 has serrated edges, two pink/red colored stripes 944 and 946, two dual-parallel lines of microprint 944 and 946, and a label serial number 934. In a dual-parallel line of microprint, such as 944 or 946, there are two parallel lines of microprint where each line includes, for example, the words "Neopost," repeated over and over again to form each line.

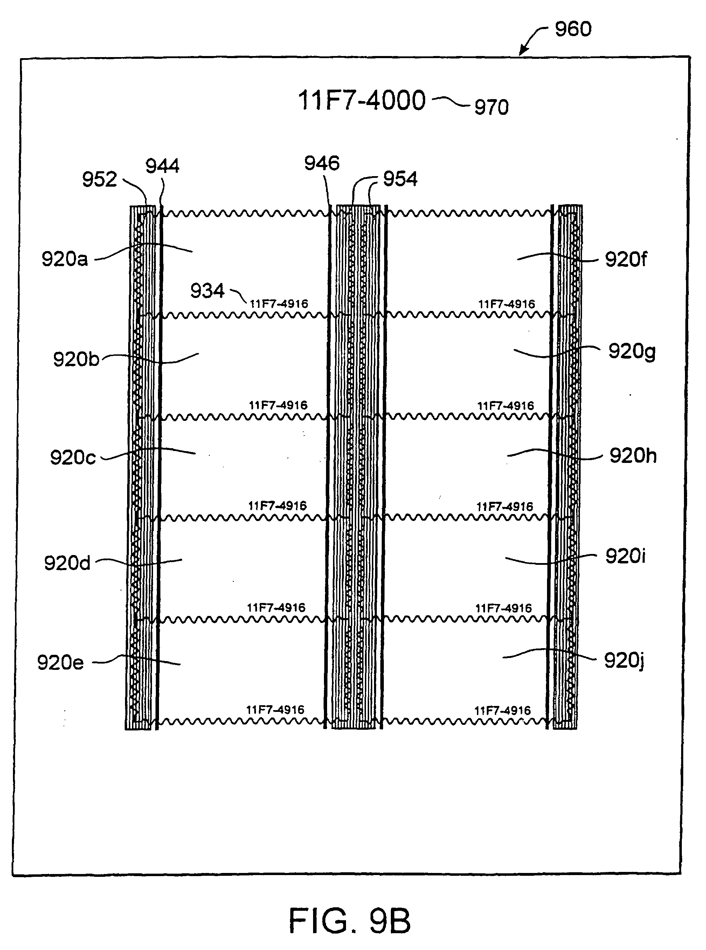

Fig. 9B illustrates a sheet 960 of postage labels having a sheet serial number 970 and ten individual postage labels (two columns of five labels each). The individual labels correspond to label 920 (Fig. 9A), and are numbered 920a-920j.

Fig. 10A illustrates printed postage stamp 1010 resulting from printing an indicium on a postage label such as postage label 920 (Fig. 9A). The printed indicium includes postal information such as the postage amount 1016, i.e., "$0.33," postal class 1017 of mail, for example, "first class," origin address 1018, e.g., "Warrenton, VA," the meter number 1019, e.g., "042N50000045," and the dimensional code 1020 which includes the digital signature. The digital signature may include the serial number 1022, e.g., "12EF-2BA3," as one of its input data fields. Note that the indicium is printed upside down relative to the label serial number and that the label serial number is different from that on label 920. The security features on postage stamp 1010, before the printing of postal information, including microprint 944 and 946, and colored stripes 952 and 954, are similar to those shown in Fig. 9A.

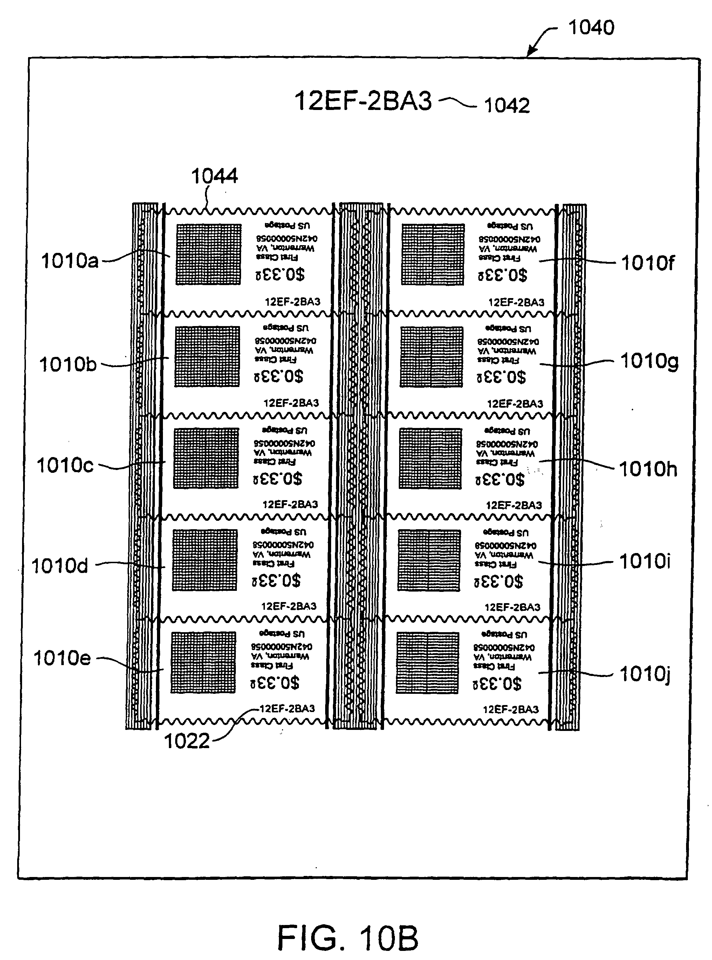

Fig. 10B illustrates an example of a printed postage label sheet 1040 using a label sheet such as label sheet 960 (Fig. 9B), except for a different serial number. The postal label sheet 1040 includes a sheet serial number 1042 and ten individual printed labels (stamps). The printed labels correspond to stamp 1010 (Fig. 10A), and are numbered 1010a-1010j.

Again, note that all the indicia are printed upside down with respect to the pre-printed label serial numbers. The symmetric design of the postage label 920 and the relatively open center area make it possible to insert the sheet into the printer either top or bottom first. To the extent that the label serial number would be overprinted by the indicium, the location of the labels on the sheet can be moved vertically relative to the edge of the sheet by an amount that guarantees an offset of the label serial numbers no matter which way the sheet is inserted. Alternatively, the label serial numbers in one column could be rotated 180 degrees and the indicia printed right side up for one column and upside down for the other column so that all the stamps would have the indicium and the label serial number "correctly" oriented for each stamp. This is the same technique illustrated with label sheet 510 and printed postage label sheet 650 described above.

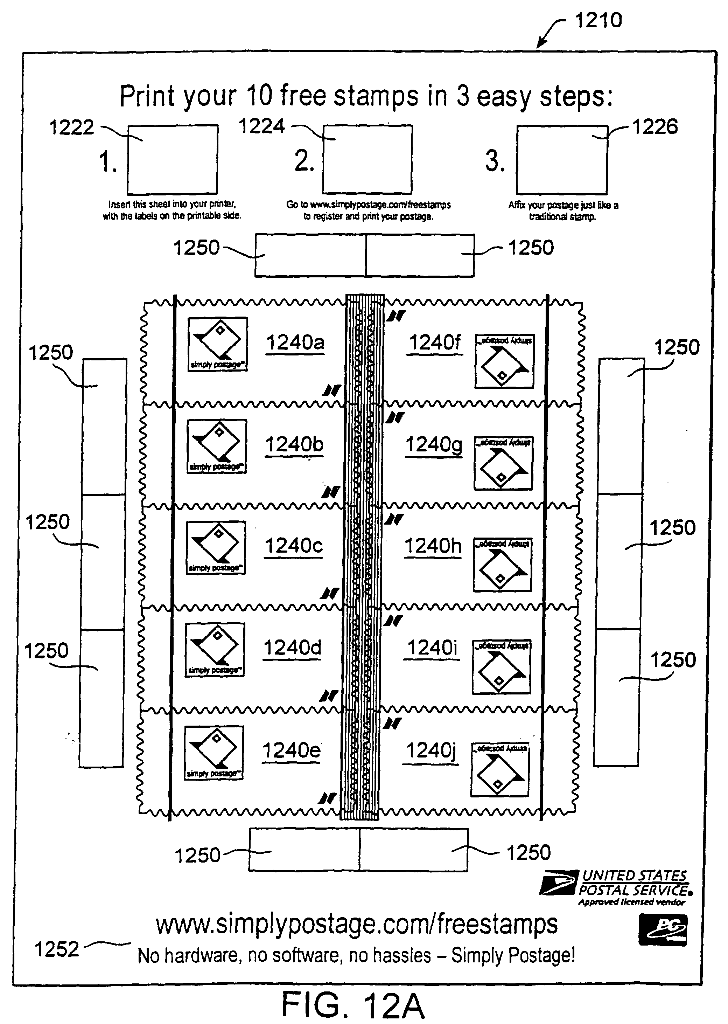

Fig. 11 illustrates an embodiment of a roll 1110 of postage labels, three of which are illustrated, 1112, 1114 and 1116. Each postage label, for example, label 1112 includes a pink/red colored stripe 1122, dual-parallel lines of microprint 1124, and an individual label serial number 1126. In this embodiment, the individual label serial number 1126 is the same as the lot serial number representing the roll of postage label stamps and may be used to unlock this lot for printing. The lot serial number for the roll corresponds to the sheet serial number for sheets.

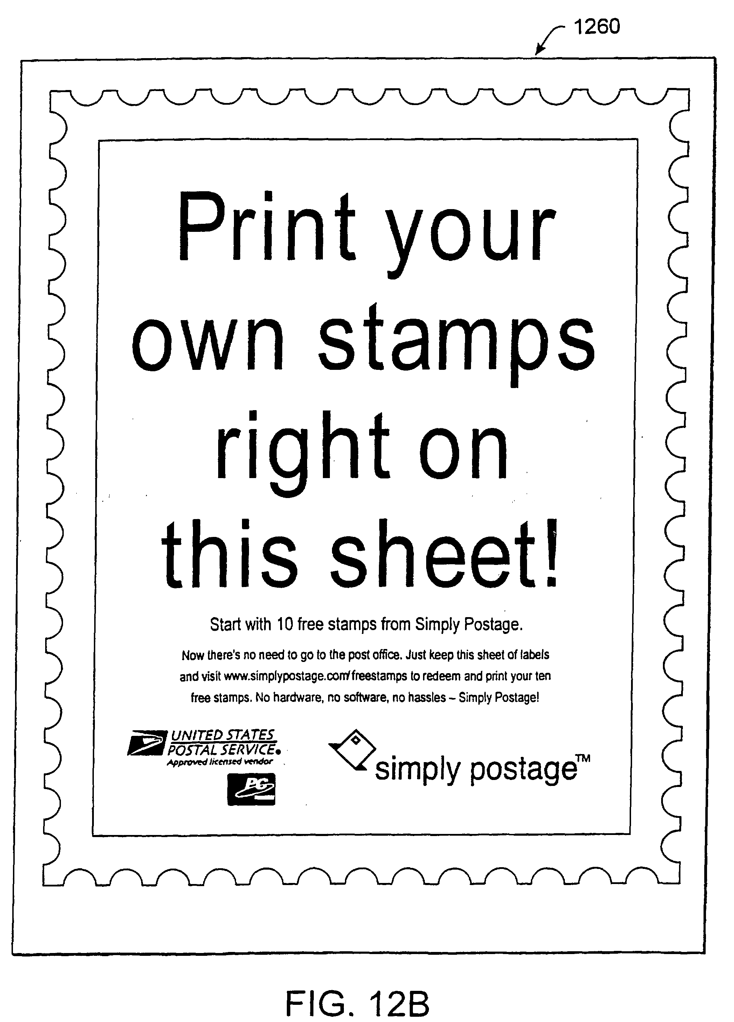

Fig. 12A illustrates an example of a sheet 1210 of postage labels in another embodiment. The sheet 1210 of postage labels includes ten individual postage labels 1240a - 1240j which can be any of the designs described above. In addition to the postage labels, the postage sheet 1210 may also include printing instructions 1222, 1224, 1226, bonus labels 1250, and information or advertisements 1252. The bonus labels 1250 can be printed with the user's return address, if specified, or with other graphical information, at the time the indicia are printed, i.e., dynamically. Fig. 12B illustrates an example of an advertisement 1260 that may be printed on the reverse of the sheet 1210 of postage labels of Fig. 12A.

### Process Flow for Printing Indicia

### User Request

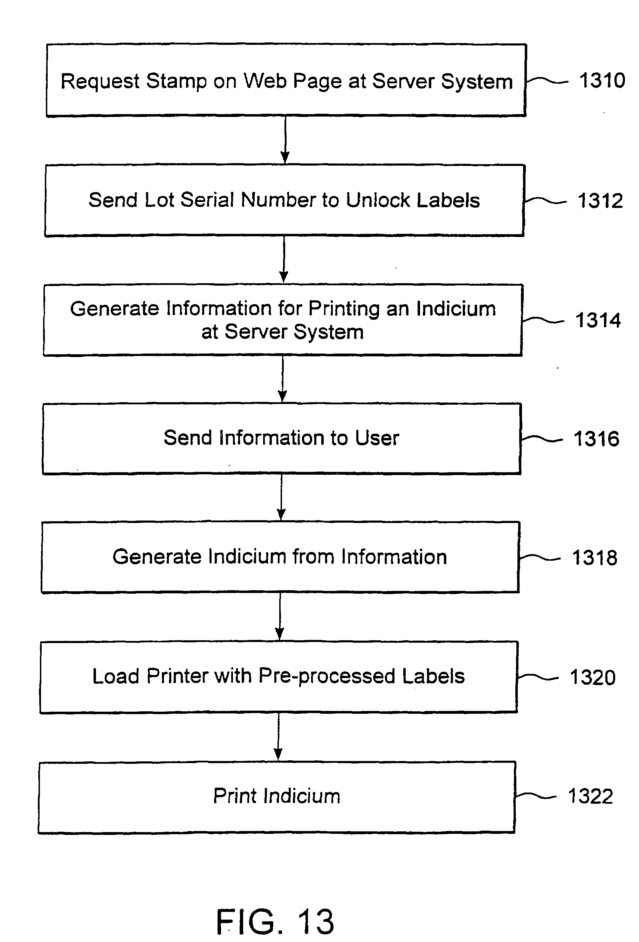

Fig. 13 is a simplified high-level flowchart showing one example of processing performed by user system 104 and PVS 102 for dispensing postage. As shown in Fig. 13, processing is generally initiated when a user accesses a web page provided by PVS 102 using user system 104 (step 1302). As described above, the user may access PVS provided web pages by providing URL information corresponding to the web pages to the browser. Using the web page, the user may then configure a request to buy postage from PVS 102 (step 1304). For example, the user may request purchase of one or more $0.33 stamps. The user may also use devices connected to user system 104 to configure the request. For example, a weighing scale connected to user system 104 may be used to provide information related to the weight of the mail piece for which postage is to be purchased.

In some embodiments, a user may be required to first register as a user of PVS 102 and open an account with PVS 102 before the user is allowed to buy postage from PVS 102. As part of this registration process, the user may be asked to provide information to PVS 102 such as information identifying the user, credit-card or other like information which may be used by PVS 102 to bill for postage purchased by the user, and other information related to the user. The information provided by the user may be stored by PVS 102 and a unique identifier may be assigned to the user to uniquely identify the user. The user may also be allowed to select a password to access the user's account. The user may also be allowed to configure user preferences related to postage buying activities. The user may also be allowed to store funds in the account which may be used for postage purchases. It should be apparent that in alternative embodiments of the present invention, the user may be allowed to buy postage from PVS 102 by paying for each transaction, with or without opening an account or registering with PVS 102.

The user request may include information identifying the user, credit-card or other like information which will be used by PVS 102 to bill for the purchased postage, the amount and value/denomination of the postage which the user wishes to purchase, and other like information which may be used by PVS 102 to process the request. A single user request may request purchase of one or more stamps. If the user is a registered user and has a pre-established account with PVS 102, the user identification information may include a user identifier assigned by PVS 102 to the user during user registration. Further, for a registered user, PVS may use information provided by the user during the registration process for billing purposes, and consequently the credit-card or other like information may not be included in the user request.

The user request may also include other information related to the mail piece/package. For example, the user request may include information related to the weight of the mail piece/package which may be used by PVS 102 to compute the exact postage value required for mailing the mail piece/package. The weight information may be directly input by the user, or may be received from devices, e.g., weighing devices, coupled to user system 104.

In an embodiment, the user request may also comprise information identifying the medium on which the indicium (or indicia) is to be printed. For example, if the indicium is to be printed on a label or a sheet of labels, the user request may include information, such as a serial number, associated with the label or sheet of labels. The serial number may be input by the user during step 1304. Alternatively, information identifying the medium may be scanned and provided to user system 104. Further details related to the use of labels and sheets of labels have been discussed in detail above.

User system 104 then communicates the user's request to purchase postage to PVS 102 via communication network 108 (step 1306). In a specific embodiment, a secure socket layer (SSL) connection is established between user system 104 and PVS 102 to facilitate communication of information between user system 104 and PVS 102, and the user purchase request is transmitted from user system 104 to PVS 102 in the form of a data structure in Extensible Markup Language (XML), and may comprise the following: 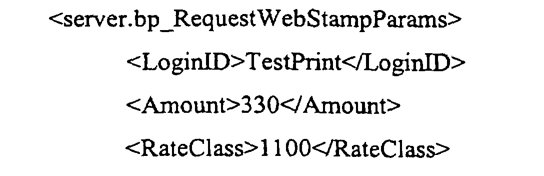 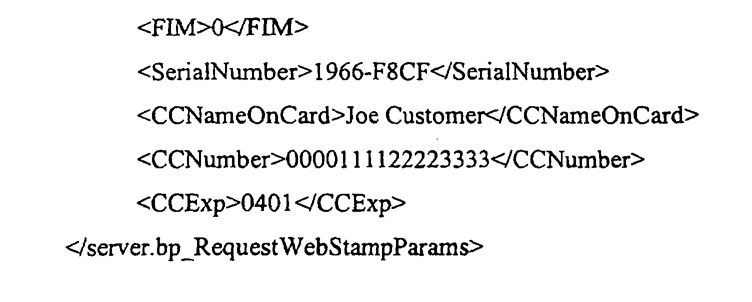 where:
*<LoginID>TestPrint<*/*LoginID>* is the user's name (or login name or identifier if the user is a registered user);
*<Amount>330<*/*Amount>*is the amount of postage to be purchased in 1/1000 of US$1. For example, 330 = $0.33;
*<RateClass>1100<*/*RateClass>* is the value corresponding to a rate class of the postage, for example, ''First Class";
*<FIM>0<*/*FIM>* is an unused legacy field which is set to zero;
*<SerialNumber>1966-F8CF<*/*SerialNumber>* identifies the medium on which the indicium or indicia are to be printed. This field identifies the serial number of the sheet of labels on which the user intends to print the indicia (assuming that the sheet of labels are serialized). This field may also identify the serial number of the individual label on which the indicium is to be printed. In embodiments of the present invention where both the labels and the sheets are serialized, this field may include one or more label serial numbers and one or more sheet serial numbers;
*<CCNameOnCard>Joe Customer<*/*CCNameOnCard>* is the user's name as spelled on a credit card which is to be used for consummating the commercial purchase transaction. If the user is a registered user, this field may be blank and PVS 102 may use information provided by the user during registration and stored by PVS 102;
*<CCNumber>0000111122223333<*/*CCNumber>* is the credit card number which the user intends to use for billing purposes. If the user is a registered user, this field may be blank and PVS 102 may use credit card information provided by the user during registration and stored by PVS 102; and
*<CCExp>0401<*/*CCExp>* is the credit card expiration date of the credit card which the user intends to use for billing purposes. For the shown example, the format of the date is month-year (MMYY). If the user is a registered user, this field may be blank and PVS 102 may use the information provided by the user during registration and stored by PVS 102.

### PVS Validation and Generation of Information for Printing an Indicium

PVS 102 then receives the user request to purchase postage from user system 104 (step 1308). PVS 102 may then validate the user request (step 1310). For example, PVS 102 may determine if the credit-card information provided by the user is valid. PVS 102 may use services provided by companies such as Cybercash and Cybersource to perform the credit-card information validation. If the request is from a registered user who has a pre-funded account, PVS 102 may determine if the user has sufficient funds in the user's account maintained by PVS 102 to satisfy the postage request. Alternatively, PVS 102 may determine if the credit-card information for the registered user is stored by PVS 102 or provided to PVS 102 by the user request. PVS 102 may also validate other information such as the identity of the user requesting the purchase, the serial number of the medium on which the postage indicium is to be printed, the type of postage requested by the user, and the like. If the validation process fails for any reason (step 1312), the user's request may be terminated and a message may be communicated to the requesting user system 104 indicating that validation of the user request was not successful (step 1314). A reason for the validation failure may also be provided.

If validation is successful, PVS 102 then generates information for printing an indicium for each stamp requested in the user postage request (step 1316). In an embodiment, the indicium related information generated by PVS 102 is along the lines specified in the IBIP specifications published by the USPS. For each indicium, the information for printing the indicium may include a bitmap of the indicium, a graphical image of the indicium, data representing the indicium, raw data corresponding to the indicium, or any other information which facilitates printing of the indicium. The information for printing the indicium is then communicated from PVS 102 to the requesting user system via communication network 108 (step 1318).

PSDM server 704 then generates the information for printing the requested indicium using the selected (and sufficiently funded) MPSD (step 820). PSDM server 704 adjusts the AR and DR values of the selected MPSD resource corresponding to the value of the requested stamp for which indicium is to be being generated. The AR value of the selected MPSD resource is increased by the amount of the stamp while the DR value of the selected MPSD resource is decreased by the stamp value. The AR and DR values for the MPSDs along with other information related to the MPSDs may be stored in database 708.

The information for printing the indicium generated in step 1316 includes a digital signature signed by cryptographic module 706 coupled to PSDM server 704. Several different digital signature algorithms may be used to generate the digital signature. These include algorithms identified in the IBIP specifications such the Digital Signature Algorithm (DSA), the Rivest Shamir Adleman (RSA) Algorithm, the Elliptic Curve Digital Signature Algorithm (ECDSA), and others. The digital signature methodology provides data integrity and non-repudiation services. In an embodiment, the digital signature generated by PSDM server 704 generally complies with the digital signature requirements specified in the IBIP specifications.

In a specific implementation of the present invention, the digital signature is signed using a DSA private key, for example, a 1024-bit DSA key, stored by cryptographic module 706. Cryptographic module 706 may also store additional keys, such as a key used for hashing purposes, and others. In an embodiment, a HMAC key is stored by cryptographic module 706 and used for hashing. In order to protect the identity of the private and other keys, cryptographic module 706 may use a master key to encrypt the stored keys. This master key is generally internally stored and cannot be exported in any way outside of cryptographic module 706. In an embodiment, a Triple Digital Encryption Standard (3DES) master key is used to encrypt the other keys.

The various keys stored by cryptographic module 706 are generally created when PSDM server 704 is initialized. The private key, hashing key, and other keys are created, encrypted using the master encryption key and then internally stored by cryptographic module 706. The public key corresponding to the private key used for signing the information for printing the indicium, for example a public DSA key corresponding to the private DSA key stored by cryptographic module 706, is then sent to the postal authority to receive a certificate serial number. The certificate serial number is stored in database 708 and used by PSDM server 704 in the indicium generation process. As mentioned above, the MPSDs associated with a cryptographic module may have separate certificates, even though they have the same public key.

As part of step 1316, data related to the process of generating information for printing the indicium may be stored in database 708. For example, financial information, user information, and other information related to generation of information for printing the indicium may be stored in database 708 by PSDM server 704 and associated cryptographic module 706. This information may be downloaded to PAS 106 at periodic intervals.

The information for printing the indicium generated in step 1316 is then forwarded by PSDM server 704 to web server 702 which communicates the information to requesting user system 104 (step 1318). As described above, PSDM server 704 may use a DCOM interface (e.g., the *IPSDStation* interface) to forward the generated indicium to web server 702. For example, a call to the *"CreateIndicium"* API returns a pointer to an *Indicium* structure which is included in the information for printing the information and which contain data representing the indicium. The contents of the *Indicium* data structure may include the following data fields: 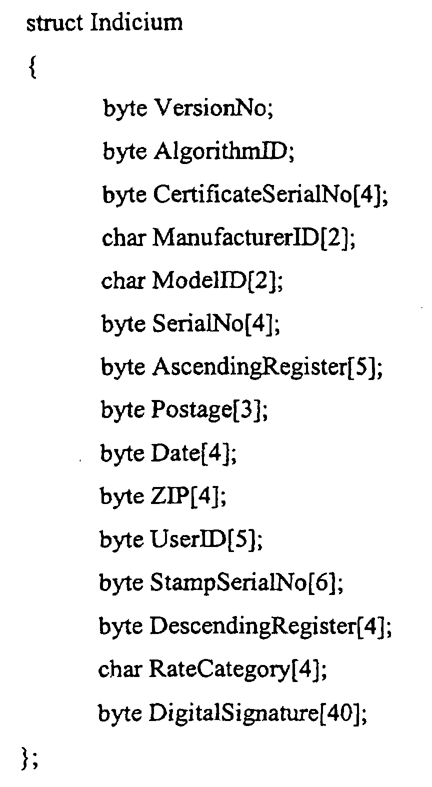 where:
*"VersionNo"* represents the version number assigned by the postal authority, for example, the USPS, to the indicia data set. A 1-byte binary value may be used to represent this data field;
*"AlgorithmID"* identifies the digital signature algorithm used to create the digital signature in the indicium. A 1-byte binary value may be used to represent this data field;
*"CertificateSerialNo"* represents a unique serial number of the PSD certificate issued by the IBIP Certificate Authority (e.g., USPS). A 4-byte binary value may be used to represent this data field;
*"ManufacturerID"* represents the USPS-assigned identifier for the postage vendor. For example, the manufacturer identifier " 04" may be assigned to Neopost. A 2-character ASCII text may be used to represent this data field;
*"ModelID"* represents the model number assigned to the product model by the postal authority (e.g., the USPS). A 2-character ASCII text may be used to represent this data field e.g., "2N". According to the IBIP specifications, the first character is this data field is a numeric value (0-9) and the second character is an alphanumeric value (A-Z);
*"SerialNo"* represents the serial number of the MPSD used to generate the indicium data. A 4-byte binary value may be used to represent this data field;
*"AscendingRegister"* represents the total monetary value of all indicia ever generated by the MPSD during its life cycle. A 5-byte binary value may be used to represent this data field;
*"Postage"* represents the amount of postage applied for this specific indicium. This data field may be represented using a 3-byte binary value in numeric format. This data field supports the maximum amount of postage due on a single piece of mail in any mail class supported by the mail system;
"*Date*" represents the date the indicium was printed (from the PSDM server's clock). This data field may be represented using a 4-byte binary value in the format YYYYMMDD);
"*ZIP*" represents the ZIP of the user requesting the indicium (also called the originating user). This data field may be represented using a 4-byte binary value in 5-digit numeric format;
*"UserID"* identifies the user requesting the indicium. For example, this field may contain the name of the user. If the user is a registered user, this field may contain the user identifier assigned to the user by PVS 102. This data field may be represented using a 5-byte binary value;
*"StampSerialNo"* is a combination field. The first section (e.g., the first byte) of the field may represent a system software identification number for the PVS software. The second section (e.g., the remaining 5-bytes) of this field may represent the serial number of the label on which the indicium is printed. For example, stamp serial number is Fig. 6 is "13DA-5F45" (reference 408);
*"DescendingRegister"* represents the postage value remaining on the MPSD. This data field may be represented using a 4-byte binary value;
*"RateCategory"* represents the postage class for the indicium and rate, including any presort discount level. The rate values for this field are usually provided by the postal authority, for example, the USPS. This data field may be represented using a 4-byte binary value; and
*"DigitalSignature"* represents the digital signature of the other data fields. The size of this data field is a function of the digital signature algorithm used for generating the digital signature. In an embodiment, a 40-byte value may be used for this field for a DSA digital signature.

The information for printing the indicium downloaded to requesting user system 104 may include various types of information representing the indicium (or indicia). In an embodiment, a bitmap or a graphical image representing the indicium may be included in the information for printing the indicium. According to another embodiment of the present invention, indicium data or a data structure comprising information representing the indicium may be included in the information for printing the indicium. According to yet another embodiment of the present invention, a data structure in XML format may be included. The XML format for the data structure may be as follows: 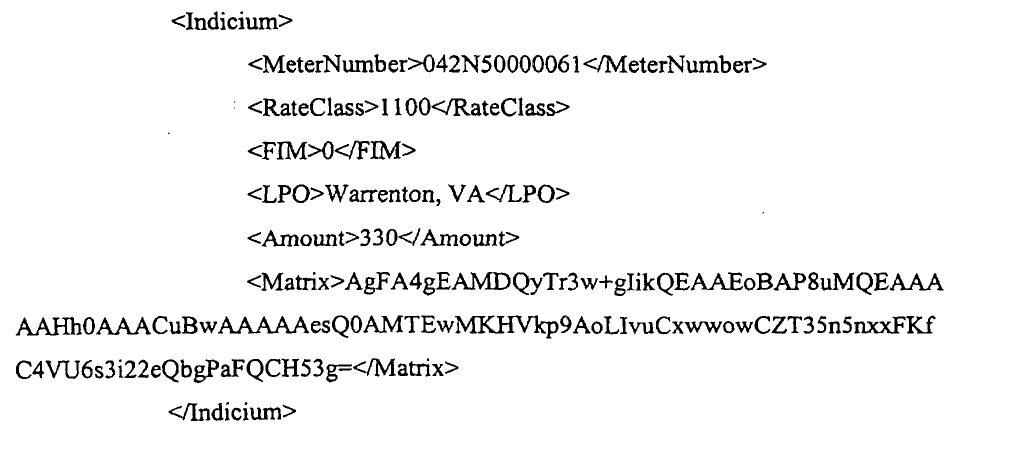 where:
*<MeterNumber>042N50000061<*/*MeterNumber>* is the unique serial number of the MPSD used for generating the indicium data structure;
*<RateClass>1100<*/*RateClass>* is a value corresponding to a rate class, for example "First Class";
*<FIM>0<*/*FIM> is* a reserved field set to 0,
*<LPO>Warrenton, VA<*/*LPO>* is an optional origin address;
*<Amount>330<*/*Amount>is* an amount of postage in 1/1000 of US$1, for example, 330 = $0.33; and
*<Matrix>AgFA4gEAMDQyTr3w+glikQEAAEoBAP8uMQEAAAAAHhOAAACuBwA AAAAesQ0AMTEwMKHVkp9AoLlvuCxwwowCZT35n5nxxFKfC4 VU6s3i22eQbgPaF QCH53g=<*/*Matrix>* is Base64-encoded binary data representing the indicium data (89 bytes) that is printed as the machine-readable portion of the indicium. The indicium data encoded in the *Matrix* section may have the format of *Indicium* data structure described above.

### Receipt of Information and Printing of Indicium

The requesting user system 104 then receives the information for printing the indicium from PVS 102 (step 1320). The information received in step 1320 may then be used to print the indicium (step 1324). For example, a printer device coupled to user system 104 may be used to print the indicium (or indicia). In an embodiment, user system 104 may process the information received from PVS 102 before printing the indicium according to step 1324. The indicium may be printed on any suitable medium such as a label, paper, sheet of labels, envelopes, cards, directly on the mail piece/package, or other like media. One or more indicia may be printed at a time. In alternative embodiments of the present invention, the user may store the information for printing the indicia on a storage medium, such as a memory disk, for subsequent printing.

As mentioned above, the labels (in sheets or rolls) on which the indicium is printed are preferably configured to possess special features that provide enhanced security against fraudulent generation of indicia. The user may be prompted to make the special label stock available to the printer and follow instructions related to the special medium before the indicium is printed. For example, the user may be prompted to feed a sheet of labels to the printer before the indicium is printed and select one or more labels on which the indicia is to be printed. The indicium or indicia may then be printed on one or more labels which may then be affixed onto the mail piece/package (just like an ordinary stamp purchased from the post office).

Several different techniques may be used for printing the indicium (or indicia) according to step 1324. In an embodiment, a printer program e.g., a "print.dII", may be downloaded to the user system 104 from PVS 102. The printer program may contain information required by the printer for printing the indicium and may control the printer and other peripheral devices, for example, a weighing machine, coupled to user system 104. The print program may be downloaded automatically from PVS 102 to user system 104 at regular time intervals, or may be downloaded upon the occurrence of specific events such as when the information for printing the indicium or indicia is communicated to user system 104 or when PVS 102 determines that a newer version of the print program is available.

After downloading, the print program may be configured to automatically execute when required to control the printer used for printing the indicium. The printer program may include, for example, a Java applet, a VBScript, a Java Script, ActiveX controls, a C++ program, a C program, a Java program, etc. which may be downloaded by the user or which may be automatically downloaded by PVS 102 to user system 104. In an embodiment of the present invention wherein the print program is a Java applet, the applet may be executed by the browser program when a user selects the option to print the indicium.

### Web Page Examples

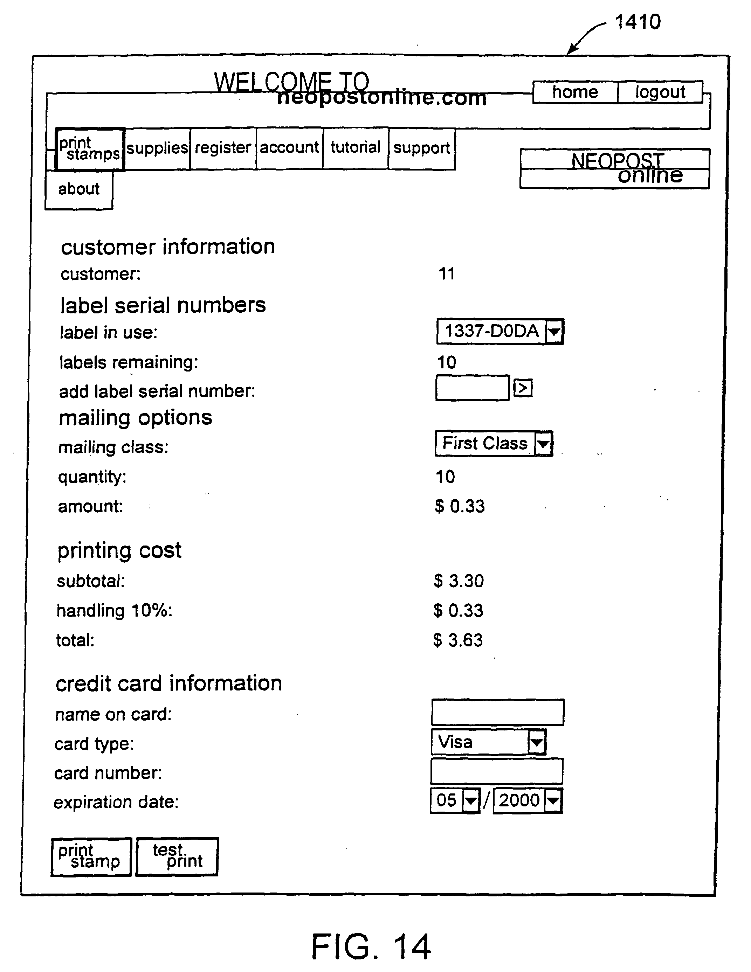

Fig. 14 illustrates an example of a web page for unlocking a lot, e.g., a sheet of postage labels, of one embodiment of the present invention. The web page 1410 includes the name of a customer/user, e.g., "11," the serial number of the labels in use, e.g., "1337-D0DA," and the labels remaining, e.g., "10." The Web page further includes a place to enter a serial number to unlock another lot of labels, the mailing class (e.g., first class), the quantity of stamps to print (e.g., 10 stamps), the amount of each stamp (e.g., 33¢ per stamp), a subtotal cost of the stamps (e.g., $3.30), a handling fee (e.g., $.33, which may include some or all the revenue for this service) and the total printing cost (in this case, $3.63). There is also included credit card information of the user, including name, card type, card numbers, and card expiration date. In one embodiment this information may be requested by the server system at a registration page. In another embodiment the user must enter the information each time the user purchases one or more stamps. The user's credit card is debited with, for example, the amount in total (e.g., $3.63).

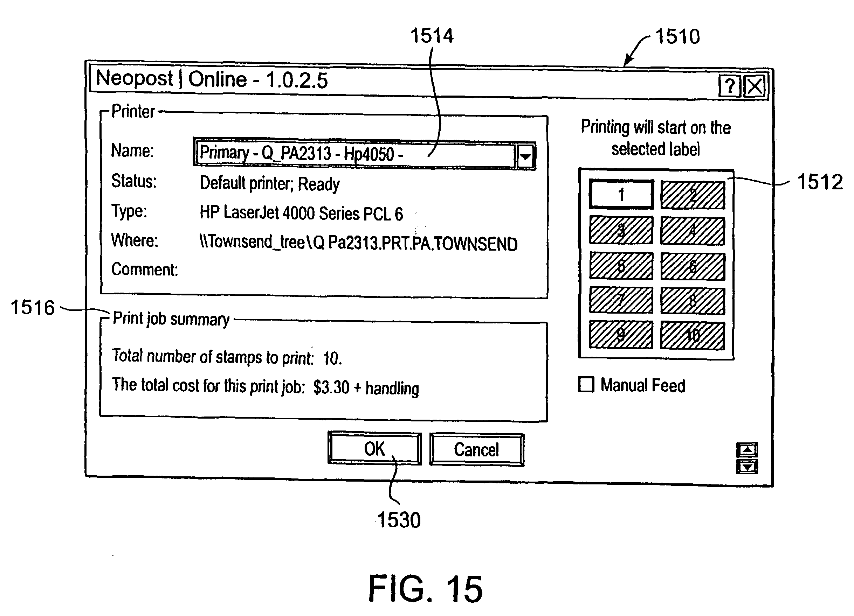

Fig. 15 illustrates a web page of the selected individual labels of a postage label sheet that are to be printed according to one embodiment of the present invention. Fig. 15 shows a window 1510 that includes the name of the printer 1514 and a layout 1512 of the individual labels on a postage label sheet. The customer may select in layout 1512 the labels on which the indicia are to be printed on. Window 1510 also may include a print job summary 1516 which indicates the total number of stamps to be printed (e.g., 10), when the OK button 1530 is selected, and the total cost for this print job (e.g., $3.30 plus handling).

### Conclusion

Although the above functionality has generally been described in terms of specific hardware and software, it would be recognized that the invention has a much broader range of applicability. For example, the software functionality can be further combined or even separated. Similarly, the hardware functionality can be further combined, or even separated. The software functionality can be implemented in terms of hardware or a combination of hardware and software. Similarly, the hardware functionality can be implemented in software or a combination of hardware and software. Any number of different combinations can occur depending upon the application.

The foregoing description of the preferred embodiments is provided to enable any person skilled in the art to make or use the present invention. Various modifications to these embodiments will be readily apparent to those skilled in the art, and the generic principles defined herein may be applied to other embodiments without the use of the inventive faculty. Thus, the present invention is not intended to be limited to the embodiments shown herein but is to be accorded the widest scope consistent with the principles and novel features disclosed herein.

## Claims

1. A method for generating an item that is used as a medium of exchange, comprising a cryptographic identifier and a pre-processed material, comprising:
obtaining the pre-processed material at a first location, wherein the pre-processed material comprises a security feature;
generating the cryptographic identifier at a second location;
sending the cryptographic identifier to the first location; and
combining the cryptographic identifier and the pre-processed material to generate the item.

2. The method of claim 1 wherein sending the cryptographic identifier from the second location to the first location is over the Internet.

3. The method of claim 1 wherein the cryptographic identifier includes a digital signature.

4. The method of claim 1 wherein the cryptographic identifier incorporates a serial number associated with the pre-processed material.

5. The method of claim 4 wherein the serial number is sent from the first location to the second location.

6. The method of claim 1 wherein the pre-processed material further comprises a pre-printed self-adhesive label.

7. The method of claim 1 wherein the item comprises a postal stamp.

8. The method of claim 1 wherein the item comprises a hunting/fishing license stamp.

9. The method of claim 1 wherein the pre-processed material comprises a label sheet.

10. The method of claim 9 wherein said security feature is a serial number unique to the label sheet.

11. The method of claim 10 wherein the cryptographic identifier incorporates the serial number.

12. The method of claim 1 wherein said security feature is selected from the set that consists of:
a microprint stripe, a color fiber, taggants, a watermark, a hologram, a serial number, a logo, a customized background, or a fluorescent stripe.

## Patentansprüche

1. Verfahren zum Erzeugen eines Objektes, welches als Tauschmittel verwendet wird und eine kryptographische Kennung und ein vorverarbeitetes Material umfaßt, umfassend:
Beschaffen des vorverarbeiteten Materials an einem ersten Ort, wobei das vorverarbeitete Material ein Sicherheitsmerkmal umfaßt;
Erzeugen der kryptographischen Kennung an einem zweiten Ort;
Senden der kryptographischen Kennung zu dem ersten Ort; und
Kombinieren der kryptographischen Kennung und des vorverarbeiteten Materials, um das Objekt zu erzeugen.

2. Verfahren nach Anspruch 1, wobei das Senden der kryptographischen Kennung von dem zweiten Ort zu dem ersten Ort über das Internet erfolgt.

3. Verfahren nach Anspruch 1, wobei die kryptographische Kennung eine digitale Signatur umfaßt.

4. Verfahren nach Anspruch 1, wobei die kryptographische Kennung eine dem vorverarbeiteten Material zugeordnete Seriennummer umfaßt.

5. Verfahren nach Anspruch 4, wobei die Seriennummer von dem ersten Ort zu dem zweiten Ort gesendet wird.

6. Verfahren nach Anspruch 1, wobei das vorverarbeitete Material ferner ein vorgedrucktes selbstklebendes Etikett umfaßt.

7. Verfahren nach Anspruch 1, wobei das Objekt eine Briefmarke umfaßt.

8. Verfahren nach Anspruch 1, wobei das Objekt eine Jagd-/Fischereilizenzmarke umfaßt.

9. Verfahren nach Anspruch 1, wobei das vorverarbeitete Material ein Etikettenblatt umfaßt.

10. Verfahren nach Anspruch 9, wobei das Sicherheitsmerkmal eine für das Etikettenblatt eindeutige Seriennummer ist.

11. Verfahren nach Anspruch 10, wobei die kryptographische Kennung die Seriennummer umfaßt.

12. Verfahren nach Anspruch 1, wobei das Sicherheitsmerkmal ausgewählt wird aus der Gruppe umfassend:
einen Mikrodruckstreifen, eine Farbfaser, einen "Taggant"-Markierungsstoff, ein Wasserzeichen, ein Hologramm, eine Seriennummer, ein Logo, einen kundenspezifischen Hintergrund oder einen fluoreszierenden Streifen.

## Revendications

1. Procédé de génération d'un article qui est utilisé comme support d'échange, comprenant un identificateur cryptographique et un matériau prétraité, comprenant les étapes consistant à :
obtenir le matériau prétraité à un premier endroit, dans lequel le matériau prétraité comprend une caractéristique de sécurité ;
générer l'identificateur cryptographique à un second endroit;
envoyer l'identificateur cryptographique au premier endroit ; et
combiner l'identificateur cryptographique et le matériau prétraité pour générer l'article.

2. Procédé selon la revendication 1, dans lequel l'envoi de l'identificateur cryptographique du second endroit vers le premier endroit se fait par Internet.

3. Procédé selon la revendication 1, dans lequel l'identificateur cryptographique comprend une signature numérique.

4. Procédé selon la revendication 1, dans lequel l'identificateur cryptographique incorpore un numéro de série associé au matériau prétraité.

5. Procédé selon la revendication 4, dans lequel le numéro de série est envoyé du premier endroit au second endroit.

6. Procédé selon la revendication 1, dans lequel le matériau prétraité comprend en outre une étiquette auto-adhésive pré-imprimée.

7. Procédé selon la revendication 1, dans lequel l'article comprend un timbre postal.

8. Procédé selon la revendication 1, dans lequel l'article comprend un timbre de licence de chasse / pêche.

9. Procédé selon la revendication 1, dans lequel le matériau prétraité comprend une étiquette.

10. Procédé selon la revendication 9, dans lequel ladite caractéristique de sécurité est un numéro de série unique pour l'étiquette.

11. Procédé selon la revendication 10, dans lequel l'identificateur cryptographique incorpore le numéro de série.

12. Procédé selon la revendication 1, dans lequel ladite caractéristique de sécurité est choisie dans l'ensemble qui est constitué par :
une bande de micro-impression, une fibre colorée, des marqueurs, un filigrane, un hologramme, un numéro de série, un logo, un fond personnalisé ou une bande fluorescente.
